# EUROPÄISCHE PATENTSCHRIFT

(11) **EP 2 934 856 B1**
(45) Veröffentlichungstag und Bekanntmachung des Hinweises auf die Patenterteilung: **13.07.2016**
(21) Anmeldenummer: 13798941.4
(22) Anmeldetag: 28.11.2013
(51) Int. Cl.: B29C 55/20

(54) **TRANSPORTSYSTEM, INSBESONDERE QUERRECKANLAGE**
TRANSPORT SYSTEM, IN PARTICULAR TRANSVERSE STRETCHING SYSTEMS
SYSTÈME DE TRANSPORT, EN PARTICULIER INSTALLATION D'ÉTIRAGE TRANSVERSAL

(30) Priorität: 20.12.2012 DE 102012025487
(43) Veröffentlichungstag der Anmeldung: 28.10.2015
(73) Patentinhaber: Brückner Maschinenbau GmbH & Co. Kg, 83313 Siegsdorf (DE)
(72) Erfinder: BAUMEISTER, Michael, 83278 Traunstein (DE); GIAPOULIS, Anthimos, 83278 Traunstein (DE); UNTERREINER, Markus, 83250 Marquartstein (DE); HÄUSL, Tobias, 83278 Traunstein (DE)
(74) Vertreter: Andrae | Westendorp Patentanwälte Partnerschaft
(86) Internationale Anmeldenummer: PCT/EP2013/003599
(87) Internationale Veröffentlichungsnummer: WO 2014/094968

(56) Entgegenhaltungen:
- DE-A1- 3 928 454
- US-A- 5 797 172

## Beschreibung

Die Erfindung betrifft ein Transportsystem insbesondere eine Reckanlage nach dem Oberbegriff des Anspruches 1.

Reckanlagen finden insbesondere bei der Kunststofffolien-Herstellung Anwendung. Bekannt sind sogenannte Simultan-Reckanlagen, in welchen ein Kunststofffilm gleichzeitig in Quer- und Längsrichtung gereckt werden kann. Bekannt sind ebenso sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Eine vorbekannte Querreckanlage oder Querreckstufe innerhalb einer Reckanlage ist beispielsweise aus der US 5 797 172 A bekannt geworden. Gemäß dieser Vorveröffentlichung wird eine zu reckende Materialbahn, in der Regel also ein Kunststofffilm, mittels Kluppen erfasst, die an Ketten befestigt sind, und die auf beiden Seiten der zu reckenden Materialbahn auf jeweils einer umlaufendenden Führungsbahn verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer abschließenden Relaxation und/oder Wärmenachbehandlung unterzogen werden kann.

Die Kluppen bestehen dabei aus einer sogenannten Kluppen-Transporteinheit, die zum einen das eigentliche Kluppenteil und zum anderen das sogenannte Transportteil, also die Kluppeneinrichtung sowie die Transporteinrichtung umfasst. Im vorbekannten Stand der Technik gemäß der US 5 797 172 A handelt es sich bei dem sogenannten Transportteil letztlich um ein Kettenteil, da die Kluppen für die erläuterte Querreckanlage über entsprechende Kettenglieder miteinander verbunden sind.

Gemäß dieses vorveröffentlichten Standes der Technik stützt sich dabei die Kluppen-Transporteinheit über Gleitelemente an zwei gegenüberliegenden Seiten einer Führungsschiene zum einen und auf einer unterhalb der Führungsschiene vorgesehenen Tragschiene zum anderen ab.

Anstelle derartiger Gleitelemente können aber genauso auch Rollenelemente verwendet werden, um die Kluppen-Transporteinheit beispielsweise an einer Führungsschiene und einer Gewichtslaufschiene abgestützt verfahren zu können. Dies ist beispielsweise aus der DE 39 28 454 A1 bekannt. Hier ist eine Führungsschiene in Form einer sogenannten Monorail beschrieben, die einen quadratischen Querschnitt aufweist. Die Kluppen-Transporteinheit stützt sich dabei über, an der Oberseite wie an der Unterseite und an den beiden in Horizontalrichtung versetzt liegenden Vertikalseiten abrollende Laufräder, sogenannte Rollen, ab, worüber die Kluppen-Transporteinheit längs dieser Führungsschiene bewegt werden kann. Eine derartige Kluppen-Transporteinheit ist ebenfalls vor allem für einen Streckrahmen, d.h. eine Querreckanlage geeignet.

Bei den vorbekannten Reckanlagen besteht grundsätzlich das Problem sicherzustellen, dass für die Roll- und/oder Gleitreibung die Reibwerte nicht zu groß werden. Denn die vorhandene Reibung führt dazu, dass Gleitmittel, insbesondere Öl verwendet werden muss, um die Reibung zu verringern. Dabei bleibt festzuhalten, dass die Reibung nicht nur zu einer erheblichen Verlustleistung beiträgt, sondern dass die Verlustleistung vor allem bei Reiblagerungen in Form von Reibleistung, d.h. insbesondere in Form von Wärme an das Führungssystem abgegeben wird. Bei hohen Geschwindigkeiten müssen deshalb konventionelle Gleitführungen gekühlt werden, um ein Zersetzen (Vercracken) des Schmieröles zu verhindern.

Demgegenüber ist es Aufgabe der vorliegenden Erfindung ein verbessertes Transportsystem insbesondere in Form einer Querreckanlage zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Im Rahmen der vorliegenden Erfindung wird ein Transportsystem für beispielsweise mit Kluppen ausgestattete Transportketten geschaffen, die (abgesehen von Kettenrädern) schienengebunden längs einer Führungsbahn verfahrbar sind. Bei den in diesem Transportsystem vorgesehenen Tragschienen wird im Gegensatz zu konventionellen Lösungen keine Ölschmierung zur Verringerung der Reib- oder Gleitwerte realisiert, sondern es ist hier die Ausbildung eines Luftlagers in Form eines Luftkissens vorgesehen.

Derartige Luftlager weisen einen extrem niedrigen Reibwert auf. Der Reibwert ist aber ein entscheidender Faktor bei derartigen Gleittransportsystemen. Er bestimmt u.a. die Dimensionierung der Kette. Bei einem geringen Reibwert sinkt die Kettenlängskraft, wodurch die Kette für geringere Lasten ausgelegt werden kann. Somit reduziert sich auch das Kettengewicht, wodurch wiederum die Kettenlängskraft reduziert wird. Eine geringere Reibzahl ermöglicht insoweit auch die Ausbildung einer leichteren Transportkette. Wie bereits im Zusammenhang mit vorbekannten Transportsystemen insbesondere von Querreckanlagen erläutert wurde, verursacht die Reibung grundsätzlich eine erhebliche Verlustleistung. Die Verlustleistung wird als Reibleistung in Form von Wärme an das Führungssystem abgegeben. Dies ist der Grund, warum bei Anlagen mit hohen Geschwindigkeiten konventionelle Gleitführungen gekühlt werden müssen, um das erwähnte Zersetzen (Vercracken) des Schmierölfilms zu verhindern. Bei dem im Rahmen der vorliegenden Erfindung vorgesehenen luftgelagerten Führungssystem ist dies nicht zu befürchten, da zum einen keine große Wärmeentwicklung zu erwarten ist und zum anderen auch kein Öl verwendet wird.

Dass im Rahmen der vorliegenden Erfindung kein Öl als Gleitmittel verwendet werden muss, bietet einen weiteren wesentlichen Vorteil. Denn die Ölschmierung bei konventionellen Transportsystemen, insbesondere Reckanlagen, birgt die ständige Gefahr in sich, dass der verwendete Ölfilm zu einer Verschmutzung des Films führt, was auf jeden Fall ausgeschlossen werden soll und muss, weshalb in konventionellen Anlagen hierfür aufwendige konstruktive Maßnahmen erforderlich sind. Da bei luftgelagerten Systemen Öl, wie erwähnt, nicht verwendet wird, ist auch eine Ölschirmung zur Vermeidung einer Ölverschmutzung nicht notwendig.

Die erwähnte Reduzierung der Verlustleistung wirkt sich zudem positiv auf die benötigte Antriebsleistung aus. Denn im Rahmen der erfindungsgemäß vorgesehenen Luftlagerung können nunmehr auch kleiner ausgelegte Antriebsmotoren verwendet werden.

Schließlich bleibt anzumerken, dass konventionelle Transport-Gleitsysteme mit einer herkömmlichen Ölschmierung bei hohen Geschwindigkeiten letztlich auch an ihre physikalischen Grenzen stoßen. Demgegenüber können im Rahmen des erfindungsgemäß vorgesehenen luftgelagerten Transportsystems sehr viel höhere Anlagegeschwindigkeiten erreicht werden.

Die Luftlagertechnik als solche ist grundsätzlich bekannt. Allerdings wird die Luftlagertechnik derzeit hauptsächlich für Messmaschinen und für langsam laufende Anwendungen verwendet und eingesetzt. Zudem sind derartige Anwendungen meist in sauberen Umgebungen vorzufinden.

Daneben ist die Luftlagertechnik auch zum Bewegen extrem schwerer Gerätschaften bekannt, bei denen üblicherweise das Luftkissen durch die zu verfahrende Gerätschaft selbst erzeugt wird. Bei derartigen luftkissenbetriebenen Fahrzeugen und Gerätschaften stellt auch eine schmutzige Umgebung in der Regel kein Problem dar. Allerdings werden auch hier meist nur geringe Geschwindigkeiten erreicht und üblicherweise auch nur kürzere Distanzen zurückgelegt. Dabei wird üblicherweise bei Standardanwendungen das Luftlager selbst mit Luft versorgt.

Darüber hinaus ist grundsätzlich auch bekannt, die Luftlagertechnik in einem umlaufenden Transportsystem zu verwenden. Verwiesen wird insoweit auf die DE 2 149 032 A, bei welcher auf einer umlaufenden Bahn in Form eines Stützkörpers ein Förderband geführt ist. Zwischen der Unterseite des umlaufenden Förderbandes und dem Stützkörper ist ein Luftlager vorgesehen, dass das Förderband trägt. Das Luftlager wird dabei durch Öffnungen in der unterhalb des Förderbandes liegenden Fläche des Stützkörpers hindurch mit Druckluft versorgt. Der Stützkörper weist dazu im Querschnitt eine rechteckförmige Form auf, in deren Innerem ein Druckluftkanal ausgebildet ist, so dass die hier zugeführte Druckluft dann durch die oben liegenden Öffnungen in Richtung Unterseite des Förderbandes ausströmen und das Förderband dadurch tragen kann.

Um den Luftverbrauch gering zu halten, sind zudem seitliche Dichtlippen vorgesehen. Bei einem derartigen vorbekannten Transportsystem soll allerdings lediglich ein mehr oder weniger flaches Transportband auf dem gebildeten Luftkissen fortbewegt werden, also eine flächige Konstruktion mit einer relativ großen Breitenerstreckung und einer demgegenüber nur minimalen Höhe.

Demgegenüber schlägt die Erfindung ein Transportsystem insbesondere in Form einer Querreckanlage vor, bei welchem schienengebundene Ketteneinheiten unter Verwendung der in Rede stehenden Luftlagertechnik an einer Tragschiene gelagert und geführt werden sollen.

In einer besonders bevorzugten Weiterbildung der Erfindung ist zudem vorgesehen, dass die Kluppen-Ketteneinheiten, die zu einer Transportkette unter Verwendung von Ketten zusammengefügt sind, insgesamt eine ausgewogene, d.h. ausbalancierte Gewichtsverteilung aufweisen. Denn in einer bevorzugten Weiterbildung der Erfindung ist vorgesehen, dass die bei einer derartigen Transportkette an den Kluppen-Transporteinheiten ansetzenden zusätzlichen Kräfte (beispielsweise ansetzende Reckkräfte, Quer- oder Seitenführungskräfte, Fliehkräfte etc.) zu keiner oder nur zu einer minimalen Einleitung von zusätzlichen Dreh- oder Kippmomenten führen, und dass dabei all die vorstehend genannten Kräfte vor allem von den Gewichtskräften der Transportkette vollständig oder zumindest nahezu vollständig entkoppelt sind. D.h. dass die eingangs genannten und zu den Gewichtskräften senkrecht verlaufenden prozessbezogenen Kräfte von der in der Regel vorgesehenen Seitenführungsschiene aufgenommen und abgefangen werden, so dass die Transportkette völlig kippfrei und drehmomentfrei über das vorgesehene Luftkissensystem gegenüber der Trageschiene abgestützt werden kann. Ansonsten bestünde die Gefahr, dass ohne derartige Maßnahmen das erwähnte Luftkissen wegen der Kippmomente einseitig ausgebildet werden würde, was zu einem sehr hohen Luftverbrauch und eventuell sogar zu einem Ausfall des Systems in gravierenden Fällen führen könnte.

Zusammengefasst bietet also die vorliegende Erfindung folgende Vorteile:
- Es lassen sich im Rahmen der Erfindung hohe Anlagegeschwindigkeiten erzielen.
- Im Rahmen der Erfindung wird eine deutlich bessere Qualität der zu reckenden Materialbahn, also des zu reckenden Kunststofffilms erzielt, und zwar durch eine geringere Ölverschmutzung beispielsweise in den Heizzonen (Ofen).
- Da kein Schmieröl mehr notwendig ist, werden die Betriebskosten gesenkt.
- Zudem wird auch der benötigte Energieverbrauch (benötigte Antriebsleistung) im Rahmen der Erfindung gesenkt, was nicht nur in umweltpolitischer Hinsicht von Bedeutung ist sondern zudem ebenfalls nicht unwesentlich zur Senkung der Betriebskosten beiträgt.

Darüber hinaus lassen sich im Rahmen der Erfindung aber noch weitere Verbesserungen realisieren, die zu weiteren Vorteilen führen.

So ist es im Rahmen der Erfindung möglich bei dem Kluppen-Kettensystem sowohl das Kluppen- als auch das Kettenteil (also allgemein das Transportteil) ganz oder teilweise aus leichten Werkstoffen herzustellen. Besonders vorteilhaft ist, wenn die Kluppen-Transporteinheit aus einem möglichst großen Anteil aus leichten Materialien wie insbesondere Verbundwerkstoffen, vor allem Faserverbundwerkstoffen besteht. Insbesondere langfasrige Faserverbundwerkstoffe wie Kohlefaserverbundwerkstoffe sind besonders geeignet.

Durch die Gewichtsreduzierung werden auch die diversen an dem Kluppen-Transportteil und insbesondere an der Kluppen-Transportkette ansetzenden Kräfte wie Schleppkräfte, Vorspann- und Fliehkräfte vermindert, was sich alles im Rahmen der Erfindung als zusätzlicher Vorteil herausstellt.

Schließlich kann eine weitere Verbesserung auch dadurch erzielt werden, dass beispielsweise an den Kluppen-Kettenteilen auf deren Unterseite Gleitkörper aus geeigneten Gleitwerkstoffen vorgesehen sind, die mit entsprechend günstigen Gleitmaterialien auf der Lauffläche der Tragschiene zusammenwirken können. Dies ist als sogenannte "Fault-Back"-Lösung von besonderer Bedeutung, wenn beispielsweise die erfindungsgemäß vorgesehene Luftlagerung versagt. Diese Gleitwerkstoffe haben Bedeutung aber beispielsweise auch dann, wenn bestimmte Steuerungsmaßnahmen in einer entsprechenden Anlage durchgeführt werden oder werden müssen, beispielsweise das Herunterfahren der Anlage etc.. Denn in diesem Fall kann durchaus der Luftstrom zurückgeregelt werden. Aber selbst beim Ausfall eines Luftstromes können dann die entsprechenden Teile aufeinander gleiten, so dass es zu keiner grundsätzlichen Beschädigung der Anlage kommen kann.

Die erwähnte erfindungsgemäße Luftkissenlagerung der Kluppen-Transporteinheit gegenüber der Tragschiene lässt sich gleichermaßen auch im Falle einer zusätzlich vorgesehenen Führungsschiene realisieren. Die gemachten Ausführungen sollen insoweit gleichermaßen ergänzend oder alternativ auch für eine Führungsschiene gelten.

Die Erfindung wird nachfolgend anhand von Ausführungsbeispielen näher erläutert. Dabei zeigen im Einzelnen:
- Figur 1a:: eine schematische Draufsicht auf eine Querreckanlage mit einer gemeinsamen Trägerstruktur für die Prozessseite und die Rücklaufseite innerhalb des Ofens;
- Figur 1b:: eine zu Figur 1a abgewandelte Ausführungsform einer zur Prozessseite getrennten Rücklaufseite für die Transportkette außerhalb des Ofens;
- Figur 2:: eine schematische Querschnittsdarstellung durch eine Trägerstruktur für die Führungsbahn einer Transportkette mit zugehörigen Kluppen;
- Figur 3:: eine Kluppe mit Teilen der Transportkette in auszugsweiser räumlicher Darstellung;
- Figur 4a:: eine erfindungsgemäße Kluppe in Seitenansicht parallel zur Vorschubbewegung der Kluppe (zur eindeutigen Kennzeichnung der Richtungen wurde ein Koordinatensystem eingezeichnet, wobei m die Transportrichtung entlang der Führungsschiene, t die Richtung des Normalenvektors dazu und z die Richtung kollinear zur Führungsschiene darstellt);
- Figur 4b:: eine entsprechende Draufsicht auf das Ausführungsbeispiel gemäß Figur 4a;
- Figur 5a:: eine Draufsicht auf den Verlauf einer Führungsbahn mit Tragschienen-Abschnitten, die unter Ausbildung eines konvexen Bogens relativ zueinander verstellbar sind,
- Figur 5b:: eine entsprechende Darstellung zu Figur 5a, bei welcher jedoch die einzelnen TragschienenAbschnitte in entgegengesetzter Richtung zu Figur 5a unter Ausbildung eines konkaven Bogens relativ zueinander verstellt sind;
- Figur 5c:: eine schematische Querschnittsdarstellung durch zwei benachbarte Schienenabschnitte unter Ausbildung einer Verbindung der beiden benachbarten Tragschienen-Abschnitte;
- Figuren 6 bis 8:: unterschiedliche Darstellungen zur Verdeutlichung einer Gelenkausbildung in der Trägerstruktur und der Tragschiene unter Ausbildung eines exakt fluchtenden Schienenüberganges;
- Figur 9:: eine schematische Seitenansicht der in den Figuren 2 bis 4b gezeigten Kluppen-Ketteneinheit mit den daran ansetzenden Kräften und Wirkebenen, in denen diese Kräfte auftreten und wirken,
- Figur 10:: eine weitere ausschnittsweise Darstellung der Tragschiene und einer längs der Tragschiene geführten Kluppen-Ketteneinheit beim Auflaufen auf ein Kettenrad, und
- Figur 11:: eine ausschnittsweise Querschnittdarstellung durch die Führungsschiene, die mit einem integrierten Druckluftkanal zur Erzeugung von Luftkissen im Bereich der Führungsschiene ausgebildet ist.

Ein Transportsystem einer Reckanlage besteht in der Regel aus einer Gewichtslaufschiene und einer Führungsschiene, die aber auch in einer Schieneneinheit kombiniert werden können.

Die Erfindung wird nachfolgend anhand eines Breitreckwerkes, also einer Querreckanlage (wie sie beispielsweise in einer sequentiellen Reckanlage eingesetzt werden kann) erläutert.

### Grundsätzlicher Aufbau

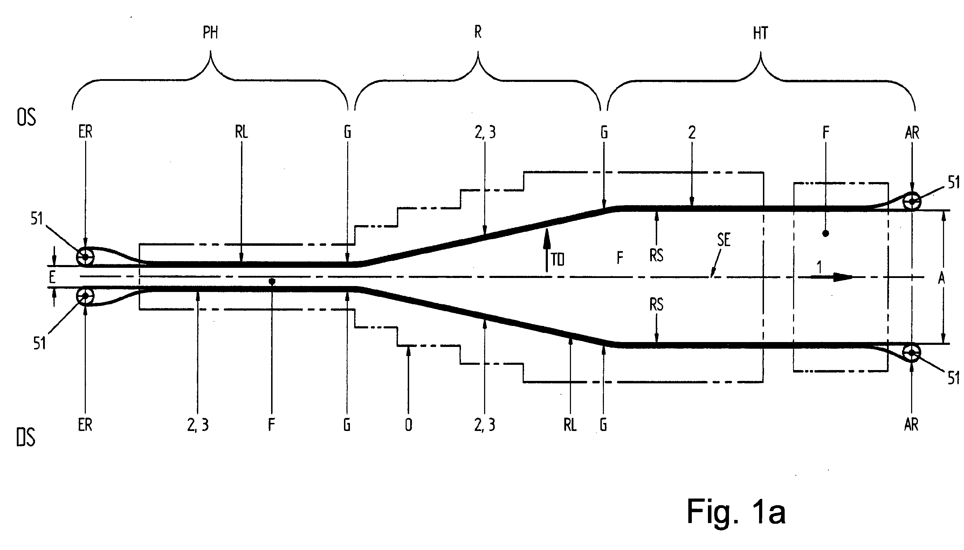

Die beschriebene Folien-Breit- oder Quer-Reckanlage, die nachfolgend auch kurz als TD-Reckanlage (TD = Transverse Direction) bezeichnet wird, weist bekanntermaßen zwei symmetrisch ausgebildete Antriebssysteme auf. In Figur 1a sind die beiden vertikal zur Zeichen-Ebene verlaufenden und symmetrisch zur Symmetrie-Ebene SE angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 (also in Maschinenrichtung MD) hindurch bewegt wird. Die erläuterte TD-Reckanlage kann dabei auch Teil einer sequentiellen Reckanlage sein, die üblicherweise eine der Querreckanlage (Querreckrahmen) vorgelagerte Längsreckstufe umfasst (im Zweifelsfall kann diese Längsreckstufe der Querreckstufe aber auch nachgeordnet sein). Die in Figur 1a gezeigte Reckanlage umfasst zwei auf den beiden umlaufenden Bahnen 2 in Umlaufrichtung angetriebene Kettentransportsysteme 3.

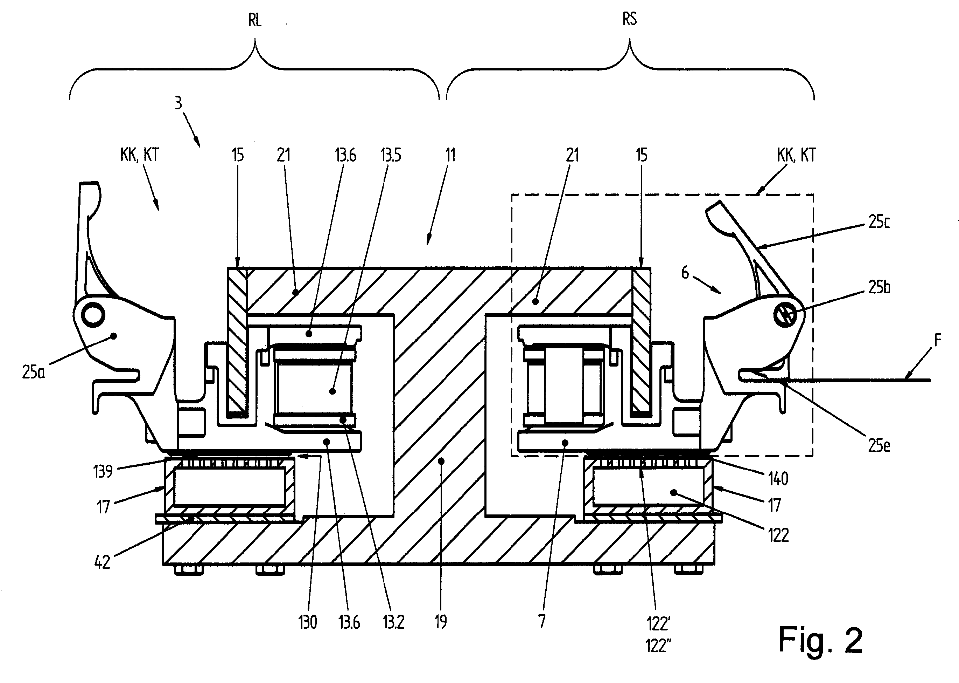

Eine biaxiale (wenn also eine Längsreckanlage der gezeigten Querreckanlage vorgelagert ist) oder eine unverstreckte Folie F (wobei im Folgenden von Folie gesprochen wird, obgleich mit einer derartigen Reckanlage allgemein eine Behandlungsbahn F entsprechend behandelt und quergereckt werden kann, so dass die Erfindung insoweit nicht auf eine Kunststofffolienbahn beschränkt ist) läuft im Einlaufbereich E in die Reckanlage ein und wird dort von nachfolgend noch erörterten Kluppen, wie sie beispielsweise anhand von Figur 2 gezeigt sind, an beiden Rändern 8 ergriffen und eingeklemmt, und zwar auf der sogenannten Operator-Seite (OS - operator side) sowie der antriebsseitigen Drive-Seite (DS - drive side). Die Folie F wird dann in einer nachfolgenden Vorheizzone PH erwärmt, und nachfolgend einer Reckzone R zugeführt, um hier in Querrichtung TD verstreckt zu werden. Anschließend durchläuft der verstreckte Film F verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Querreckmaschine, also die Querreckanlage TD.

Im Folgenden wird ferner von einer Kluppen-Transporteinheit KT gesprochen, die nachfolgend teilweise auch als Kluppen-Ketteneinheit KK bezeichnet wird. Diese Kluppen-Transporteinheit KT bzw. Kluppen-Ketteneinheit KK umfasst zum einen das sogenannte Kluppenteil 6, welches mit dem Ketten- oder Transportteil 7 verbunden ist. Im erläuterten Beispiel, bei welchem eine Transportkette zum Einsatz gelangt, wird bevorzugt von einem Kettenteil 7 gesprochen, welches Teil der Kluppen-Ketteneinheit KK ist.

Wie bekannt ist, befinden sich diese Kluppen-Ketteneinheiten KK, d.h. also der erwähnte Kluppenteil 6 und das Kettenteil 7 in einem umlaufenden Transportsystem 3, welches zum einen eine Trägerstruktur, d.h. einen Trägeraufbau 11 sowie eine umlaufende Transport-Kette 13 umfasst, an der die erwähnten Kluppenteile 6 mitlaufend befestigt oder ausgebildet sind. Der Trägeraufbau 11 umfasst eine Führungsschiene 15. Neben dieser Führungsschiene 15 ist ferner noch eine das Gewicht der Kette und der Kluppen aufnehmende Tragschiene 17 vorgesehen, die nachfolgend auch teilweise als Gewichtslaufschiene 17 bezeichnet wird. Wie sich aus der nachfolgenden Erläuterung noch ergibt, erfolgt die Führung und Abstützung der Transportkette an der Führungsschiene 15 mittels der mitverfahrbaren Kluppen (beispielsweise mittels einer Gleitlagerung oder auch mittels einer Luftkissenlagerung) und an der Tragschiene 17 mittels einer Luftkissenlagerung.

Die erläuterte Tragstruktur kann als gemeinsame Tragstruktur für das Transportsystem sowohl auf der Reck- oder Prozessseite RS als auch auf der Rücklaufseite RL verwendet werden (Figur 2).

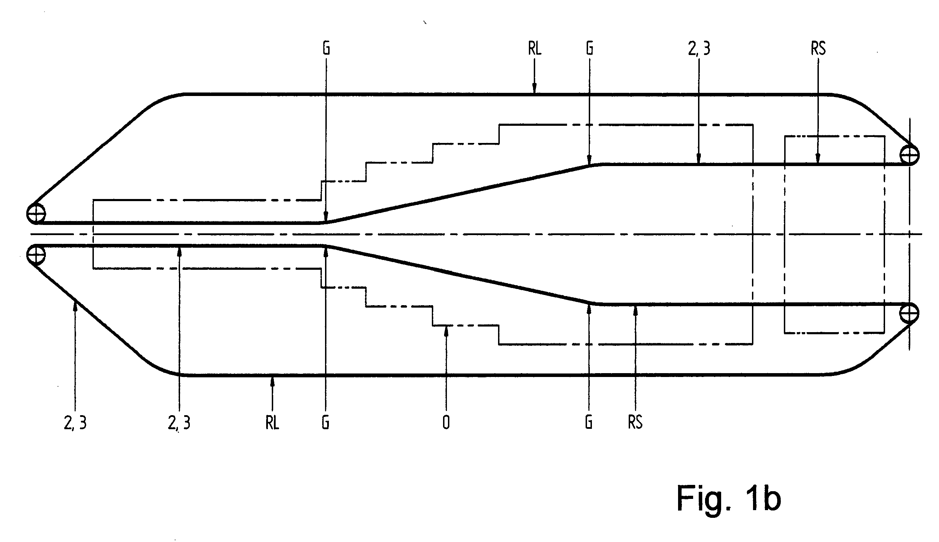

In Figur 2 ist ein Querschnitt durch das Transportsystem zu ersehen, nämlich mit einer gemeinsamen Tragstruktur 11, die neben einem in der Mitte angeordneten, eher vertikal verlaufenden Träger 19, einen darüber abgestützten Querträger 21 umfasst, an dessen gegenüberliegenden voneinander weg weisenden Enden jeweils die von oben nach unten verlaufende, im Querschnitt rechteckförmige Schiene 15 montiert ist, nämlich wie erwähnt auf der Reckseite RS zum einen und auf der Rückseite RL zum anderen. Bei einer derartigen gemeinsamen Traganordnung befindet sich das Transportsystem gemeinsam innerhalb eines Ofens O (Figur 1a). Dieser Ofen umgibt sowohl die Vorheizzone PH, die Reckzone R als auch die Nachheizzone oder Relaxationszone HT, so dass letztlich nur die auf der Einlass- und Auslassseite vorgesehenen Umlenk- und Antriebssysteme außerhalb des Ofens O zu liegen kommen. Ansonsten kann auch eine getrennte Trägerstruktur für die Reckseite RS wie die Rücklaufseite RL vorgesehen sein, so dass in diesem Fall nur die reckseitige Trägerstruktur mit der zugehörigen Führungsschiene und der Gewichtslaufschiene durch den Ofen O verläuft und eine entsprechend ausgebildete weitere Trägerstruktur auf der Rücklaufseite außerhalb des Ofens O vorgesehen ist. Ein entsprechender Aufbau in schematischer Draufsicht ist in Figur 1b gezeigt.

Wie erwähnt, wird die Transportkette 13 sowohl auf der Auslauf- wie der Einlaufseite durch Auslauf- und/oder Einlaufräder AR bzw. ER angetrieben und umgelenkt.

Um das System flexibel zu gestalten sind ferner an verschiedenen Stellen Gelenke G für die Führungsschiene und die Tragschiene vorgesehen, worauf später noch eingegangen wird. Durch unterschiedliche Einstellung dieser Gelenke lassen sich insbesondere in der Reckzone R verschiedene Querreckverhältnisse einstellen.

### Aufbau des Transportsystems, insbesondere der Transportkette und der zugehörigen Kluppenkörper sowie des Luftkissensystems.

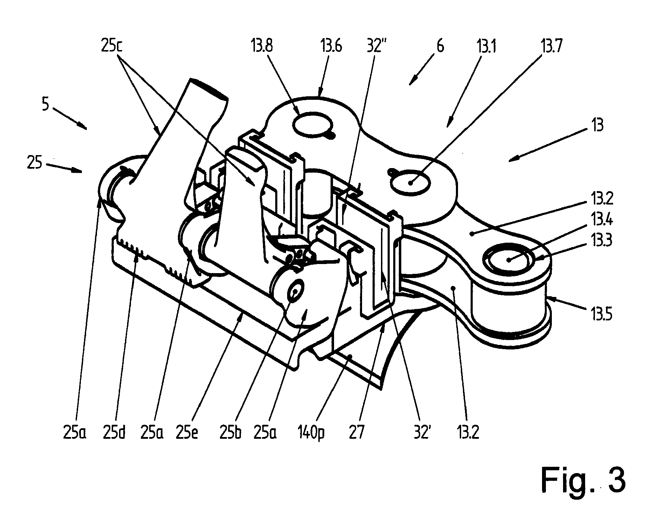

Nachfolgend wird der grundsätzliche Aufbau der Transportkette 13 mit den Kettenteilen 7 und den zugehörigen Kluppenteilen 6 (mit ihren Kluppenkörper) sowie des Trägeraufbaus anhand der Figuren 3 bis 5 näher erläutert.

Aus Figur 3 ist dabei ein Ausschnitt der Transportkette 13 zu ersehen, wobei die Transportkette in bekannter Weise jeweils Kettenglieder 13.1 umfasst, die gelenkig miteinander verbunden sind. Eine derartige sogenannte Rollen-Kette umfasst in bekannter Weise jeweils ein Paar von im Axialabstand parallel zueinander angeordneten Innenlaschen 13.2 (Figur 3), die jeweils zwei Bohrungen 13.3 aufweisen, in deren Axialverlängerung zwischen den beiden Laschen eine Hülse 13.4 angeordnet ist, worüber die beiden Innenlaschen 13.2 fest miteinander verbunden sind. Auf dieser Innenhülse 13.4 ist eine als Schonrolle bezeichnete Außenhülse 13.5 aufgesteckt, die auf der darunter befindlichen Hülse 13.4 frei drehen kann.

Jeweils zu den Innenlaschen 13.2 außenliegend sind sogenannte Außenlaschen 13.6 verkettet angeordnet, so dass letztlich das Paar von Innenlaschen 13.2 mit zwei benachbarten, d.h. einem Paar vor- und einem Paar nachlaufenden Außenlaschen 13.6 verbunden ist. Dazu durchsetzt jeweils ein Bolzen 13.7 die entsprechende Bohrung 13.8 in der Außenlasche 13.6 und durchragt dabei die entsprechende Bohrung 13.7 der Innenlasche sowie die innenliegende Hülse 13.4. Über diese Bolzen 13.7 ist jeweils das betreffende Paar von Außenlaschen 13.6 ebenfalls fest miteinander verbunden.

Die Außenlaschen 13.6 sind dabei im gezeigten Ausführungsbeispiel jeweils Teil der Kettenteile 7. Dabei können sie gleichwohl einstückig mit dem Kluppenteil 6 verbunden oder an diesem befestigt sein.

Die so gebildete Transportkette 13 umfasst einen Kluppenmechanismus oder -abschnitt 25 mit einer Kluppenhalterung 25a, die beispielsweise aus zwei in Horizontalrichtung versetzt liegenden Kluppenwangen besteht oder diese umfasst. Zwischen diesen verläuft eine horizontale Kluppenachse (sogenannte Messerklappe) 25b, mittels der dann der entsprechende Kluppenhebel 25c in bekannter Weise zwischen einer Freigabestellung und einer Film-Fixierstellung verschwenkbar ist, in welcher seine unten liegende Greiffläche (Fixierabschnitt) 25d einen Film zwischen der Greiffläche 25d und den Kluppentisch 25e fixieren, d.h. einklemmen und festhalten kann.

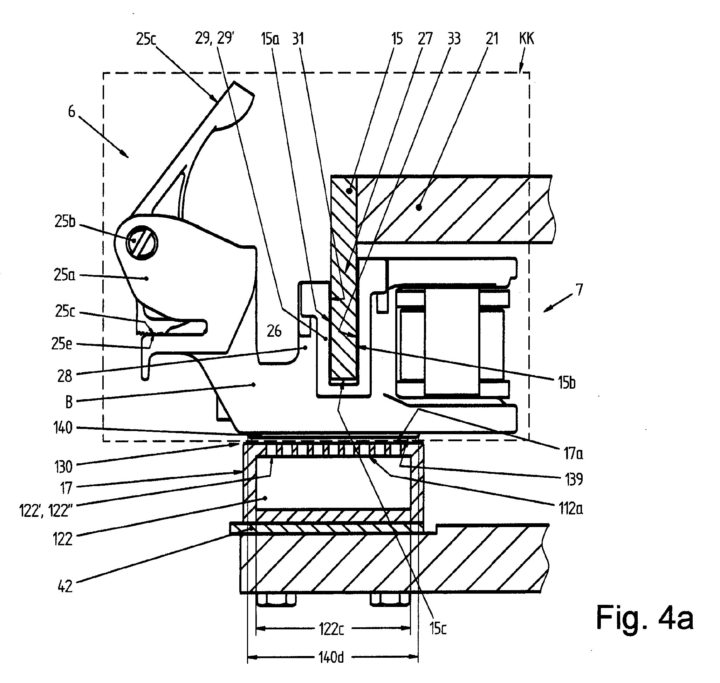

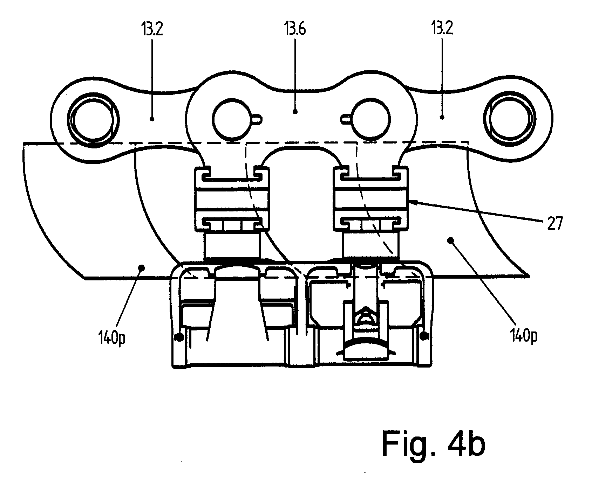

Die gesamte Anordnung ist (wie sich insbesondere aus Figur 4a in Seitenansicht und in Figur 4b in Draufsicht auf einen Kluppenkörper mit zugehörigen Kettengliedern ergibt) dergestalt, dass zwischen dem Kluppenteil 6 (d.h. dem eigentlichen Kettenabschnitt KE) und dem Kettenteil 7 (d.h. dem eigentlichen Kluppenabschnitt KE) eine U-förmige Ausnehmung 26 unter Ausbildung eines Brückenteils B (worüber das Kluppen- mit dem Kettenteil verbunden ist) vorgesehen ist, wobei sich an diese U-förmige Ausnehmung 26 ein vertikal nach oben vorstehender Materialsteg 28 anschließt, auf den wiederum eine weitere U-förmige Ausnehmung 27 im Kettenteil 7 folgt, in welche eine entsprechende Führungsschienen-Gleitlagerung 29 eingesetzt ist, die nachfolgend teilweise auch als Gleitschuh 29a bezeichnet wird. Die beiden erwähnten U-förmigen Ausnehmungen 26, 27 und der dazwischen befindliche, sich über eine Teilhöhe vertikal erstreckende rippenförmige Materialsteg 28 sind alle in axialer Längsrichtung der Kluppen-Ketteneinheit KK verlaufend ausgebildet.

Diese Führungsschienen-Gleitlagerung 29 umfasst einen im Querschnitt U-förmigen Gleitkörper oder Gleitschuh 29a mit entsprechender Breite oder Länge in Richtung der Führungsschiene 15, um hier die entsprechenden Führungskräfte aufzunehmen. Dazu weist die Führungsschienen-Gleitlagerung 29 ein kluppenseitig liegendes Kettenkraft-Gleitelement oder eine Kettenkraft-Gleitanordnung 31 mit einer Kettenkraft-Lauffläche 31a auf, die nachfolgend auch als Kettenkraft-Gleitfläche 31a bezeichnet wird. Gegenüberliegend dazu ist eine zweite Lauf- und/oder Gleitfläche 33a an einem Reckkraft-Gleitelement oder an einer Reckkraft-Gleitanordnung 33 ausgebildet, die nachfolgend teilweise auch als Reckkraft-Lauffläche 33a oder Reckkraft-Gleitfläche 33a bezeichnet wird. Die Gleitflächen können auch integraler Bestandteil der Kluppen-Ketteneinheit KK sein.

Auf der Unterseite des Kluppenkörpers 6 sind eine oder mehrere Luftlager-Kissenplatten 140 ausgebildet bzw. vorgesehen, worauf die Kluppen-Ketteneinheiten KK (also die jeweiligen Kluppenteile 6 mit den damit verbundenen Kettenteilen 7) mit dem entsprechenden Gewicht unter Zwischenschaltung eines nachfolgend noch erläuterten Luftkissens 130 gegenüber der Trag- und/oder Laufschiene 17 (Figur 2) abgestützt sind. Die Unterseite dieser Luftlager-Kissenplatten 140 wird nachfolgend teilweise auch als Kissenplatten-Tragfläche 139 bezeichnet.

Aus den Darstellungen gemäß Figuren 3, 4a und 4b ergibt sich ferner, dass bei der erläuterten Kluppenkonstruktion zwei Kluppenhebel 25c, die auch teilweise als Messerklappen 25c bezeichnet werden, auf dem Kluppenkörper 6 angeordnet sind, nämlich in Längsrichtung der Transportkette versetzt zueinander liegend. Diese können dabei auf einer gemeinsamen Kluppenachse 25b verschwenkbar angeordnet sein, wobei die beiden Kluppenhebel oder Messerklappen 25c getrennt voneinander zwischen ihrer Öffnungs- und Schließstellung umgesteuert werden können. Auch hierdurch wird eine Reduzierung des Gesamtgewichts und der Gesamtkosten realisiert. Natürlich sind auch Systeme mit nur einer oder mehr als zwei Messerklappen möglich.

Schließlich wird eine Gewichts- und Kostenminimierung auch dadurch realisiert, dass im gezeigten Ausführungsbeispiel für die Transportkette 13 eine Kettenteilung von z.B. um 75 mm verwirklicht ist, also eine Kettenteilung von bevorzugt mehr als 60 mm und weniger als 90 mm, insbesondere mehr als 65 mm und weniger als 85 mm, bevorzugt zwischen 70 mm und 80 mm. Grundsätzlich sind aber alle Teilungen für das beanspruchte System vorstellbar.

Der erläuterte Kluppenkörper 6 wird mit dem mit ihm fest verbundenen Kettenteil 7 als Teil der Transportkette 13 auf der anhand von Figur 2 bereits erläuterten Tragkonstruktion 11 sowohl auf der Prozess- oder Reckseite RS als auch auf der Rücklaufseite RL fortbewegt (wobei Figur 2 eine Ausführungsform entsprechend Figur 1a zeigt) ansonsten wäre der Vorlauf und der Rücklauf und damit die Tragkonstruktion für die Führungsschiene auf der Vorlauf- und der Rücklaufseite getrennt. Aus dieser Darstellung ist ferner ersichtlich, wie eine betreffende Kluppen-Ketteneinheit KE mit seinem im Querschnitt U-förmigen Gleitlager 29 geführt ist, indem die entsprechenden beiden gegenüberliegenden Gleitlagerflächen an den gegenüberliegenden Außenflächen 15a, 15b der als Führungsschiene konzipierten Führungsschiene 15 während der Vorwärtsbewegung der Transportkette anliegen und dadurch geführt werden.

Die Tragschiene 17 ist als gasdurchströmte Tragschiene ausgebildet, die also im Inneren einen von einem gasförmigen Medium, insbesondere von Luft durchströmten Strömungskanal 122 aufweist.

An der eigentlichen Tragschienen-Lauffläche 17a kann dann eine Vielzahl von Gasaustrittsöffnungen, insbesondere Luftöffnungen 122' an der oberen Wand des Kanals 122 ausgebildet sein, durch die hindurch unter Druck stehendes Gas oder Luft ausströmen kann, und unmittelbar auf die Unterseite der Kluppen-Ketteneinheit KK strömt, wobei diese Unterseite der Kluppen-Ketteneinheit KK allgemein als Lagereinrichtung 139 und im Konkreten als Kissenplatten-Tragfläche 139 bezeichnet ist. Dadurch wird ein Luftpolster 130 gebildet, wodurch sichergestellt ist, dass die entsprechenden Kluppen-Ketteneinheiten und damit die gesamte Transportkette mittels eines Luftpolsters 130 getragen und geführt werden bzw. wird.

Der erwähnte Gas- oder Luftkanal 122 weist also an seiner Oberseite eine Kanalwand 122a auf, in der die entsprechende Luftauslassöffnung 122' ausgebildet ist, d.h. dass diese oben liegende Tragwand bevorzugt mit einer Perforation 122" versehen ist, um möglichst gleichmäßig und vollflächig verteilt einen Luft- bzw. Gasaustritt zu ermöglichen. Bevorzugt bestehen von daher die entsprechenden Luftauslassöffnungen 122' aus feinverteilten Bohrungen, wobei diese feinverteilten Bohrungen bevorzugt aus einer offenporigen Metallschaum-Konstruktion bestehen können, durch die die Druckluft ausströmt.

Dadurch ergibt sich ein extrem niedriger Reibwert und somit eine geringe Reibleistung. Hierdurch können auch besonders hohe Anlagen-Geschwindigkeiten realisiert werden, da Luft oder ein gasförmiges Medium - anders als Öl - nicht vercracken kann. Schließlich lässt sich - auf diesem Prinzip basierend - auch ein sehr leichter Transport realisieren, da durch den geringen Reibwert auch sehr geringe Kettenlängskräfte entstehen. Zudem wird die Gefahr einer Kontaminierung der zu reckenden Materialbahn, insbesondere des zu reckenden Kunststofffilms, durch ansonsten möglicherweise in Richtung Kunststofffilm geschleuderte Ölpartikel und Ölspritzer nochmals verringert.

Dabei ist der Aufbau des anhand von Figuren 2 bis 4a erläuterten Transportsystems grundsätzlich ähnlich zum Stand der Technik, bei welchem anstelle der erwähnten Lagereinrichtung/Kissenplatten-Tragfläche 139 eine übliche Gewichtslauffläche an der Unterseite eines Gleitelementes eingesetzt wird, welches mittels einer Ölschmierung gegenüber der Tragschienen-Lauffläche 17a geschmiert ist.

Anstelle herkömmlicher Gleitflächenschuhe werden also sogenannte Luftlager-Kissenplatten 140 verwendet. Die erwähnten Reck- oder Querkräfte, Fliehkräfte etc., die also senkrecht zu den Gewichtskräften wirken, wirken allesamt nur auf die Führungsschiene 15, die insoweit keine weitere Änderung erfährt oder erfahren muss.

Die erwähnte Luftlager-Kissenplatte 140 kann dabei aus jedem geeigneten Material bestehen. Möglich ist beispielsweise - obwohl hier keine Gleitwirkung mit der Tragschiene 17 aufgrund des Luftkissens 130 stattfindet - gleichwohl die Verwendung von Materialien, wie sie auch als Gleitwerkstoffe grundsätzlich in Betracht kommen könnten. Es kann sich dabei beispielsweise um Materialien wie Polyetheretherketone, Karbon, Graphitwirkstoffe etc. handeln. Der Hintergrund dafür ist, dass eine entsprechend gute Gleitwirkung zwischen der Trag- oder Gleitfläche 139 der Luftlager-Kissenplatte 140 und der Oberseite 17a der Trag- und Laufschiene 17 gegeben sein soll. Denn beim Ausfall einer Druckluftversorgung muss die Kluppen-Ketteneinheit KK dann gleichwohl unter Einräumung optimaler Gleit-Reibwerte zumindest bis zum Stillstand der Anlage auf der Trag- und Lauffläche 17a der Tragschiene 17 gleiten. Von daher werden bevorzugt Gleitschuhmaterialien z.B. aus PEAK/PEEK oder aber auch aus neuen Gleitmaterialien auf Graphitbasis bevorzugt.

Für die erwähnten Gleitelemente kommen also Kunststoffe in Betracht, die beispielsweise aus Thermoplasten oder Duroplasten bestehen oder diese umfassen können. Dabei können die Thermoplaste oder Duroplaste wie folgt zusammengesetzt sein oder die folgenden Anteile umfassen:
- Fasern aller Art zur Verstärkung (Anteil von 0% bis 100%), beispielsweise in Form von Kohlefasern, Glasfasern etc.,
- Festschmierstoffe aller Art (Anteil von 0% bis 100%), beispielsweise in Form von Graphit, Molybdändisulfid etc.,
- Beschichtungen aller Art, z.B. Kunststoffen, Metallen etc.,
- Oberflächenbehandlungen aller Art, z.B. mit Gasen, Strahlung, thermisch, elektrisch, etc.,
- mechanische Oberflächenbehandlungen, z.B. durch Drehen, Fräsen etc..

Dabei können die vorstehend genannten Gleitelemente auch aus Kombinationen von Thermoplasten und Duroplasten, auch unter Berücksichtigung der vorstehend genannten ergänzenden Erläuterungen und Ergänzungen, also auch unter zusätzlicher Berücksichtigung weiterer vorstehend genannter Kombinationen oder Werkstoffen bestehen oder diese umfassen.

Die Gleitelemente 31, 33 der Gleitlagerung 29 für die Führungsschiene 15 können gleichermaßen ausgebildet sein.

Im Gegensatz zu einem konventionellen Luftlager strömt, wie beschrieben, die Druckluft im Rahmen des erfindungsgemäß erläuterten Ausführungsbeispiels aus der Führung und nicht aus dem Lager selbst. Der Vorteil in dieser Anordnung liegt darin begründet, dass keine Druckluftversorgung auf der bewegten Kette angebracht werden oder vorgesehen sein muss. In der oben liegenden Gewichtslauffläche 17a der Trag- oder Gewichtsschiene 17 sind fortlaufend kleine Luftaustrittsöffnungen 122' eingebracht. Diese Öffnungen sollten möglichst klein sein. Hier bieten sich Lochquerschnitte an, die beispielsweise kleiner als 1 mm, 0,9 mm, 0,8 mm, 0,7 mm, 0,6 mm, 0,5 mm, 0,4 mm, 0,3 mm, 0,2 mm, insbesondere kleiner als 0,1 mm sind. Ebenso ist eine Tragschiene mit einer oben aufliegenden Gewichtslauffläche 17a verwendbar, die ein poröses Führungsmaterial (ähnlich Sinterwerkstoff) umfasst. Aus diesen mikroskopisch kleinen Öffnungen kann dann die Druckluft nach oben hin ausströmen. Dabei sollte der Gleitlagerwerkstoff der Luftlager-Kissenplatte 140 extrem gute Notlaufeigenschaften aufweisen.

Durch die bereits erwähnte Verringerung der Masse der Kluppen-Transporteinheiten KT wird zudem vor allem die benötigte Energie zum Betrieb einer derartigen Anlage weiterverringert. Selbst beim Ausfall der Erzeugung der erwähnten Luftkissen (beispielsweise beim Anfahren oder Herunterfahren der Anlage), wenn es zu einer Kontaktberührung zwischen den bevorzugt aus Gleitmaterialien bestehenden Luftlager-Kissenplatten 140 und den Laufflächen 17a der Tragschiene 17 kommt, werden die hier wirksamen Kräfte durch die leichtere Transportkette ebenfalls minimiert.

### Gewichtslaufflächen-Elemente

Wie bereits erwähnt wurde, muss insbesondere auch zur Veränderung des Reckgrades in der Reckzone der Verlauf der Führungsschiene 15 und damit auch der Verlauf der Tragschiene 17 unterschiedlich eingestellt werden.

Zur Verstellung der Führungsschiene wird insoweit auf bekannte Lösungen verwiesen. Diese bestehen üblicherweise aus einem einzigen Stahlband oder teilweise aus einem Paket von biegsamen durchlaufenden Federstahlbändern, die im Querschnitt vertikal ausgerichtet und horizontal nebeneinander angeordnet sind. Dadurch ergibt sich eine Verstellmöglichkeit der Führungsschiene 15 quer zu den vertikal verlaufenden Laufflächen 15a und 15b der Führungsschiene 15.

Mittels derartiger Gelenke kann der Verlauf der Führungsbahn 2 vor allem im Bereich der Reckzone entsprechend den gewünschten und optimalen Vorgaben eingestellt werden.

### Gelenkkonstruktion der Trag- und Druckluftschiene

Die Tragschiene 17 umfasst in dem nachfolgenden Ausführungsbeispiel eine Tragschienenkonstruktion bzw. eine Tragschienenstruktur TS mit einem oder mehreren einzelnen Tragschienen-Abschnitten oder Tragschienen-Kammern TSi, i=1...n, die mit einem bevorzugt gasförmigen Medium, welches unter Druck steht, beströmt werden, so dass jeweils darüber liegend durch die erwähnten Austrittsöffnungen 122' das erwünschte Luftpolster 130 erzeugt werden kann.

Ferner umfasst die Tragschiene 17 in dem nachfolgenden Ausführungsbeispiel eine Trägerkonstruktion oder Trägerstruktur TR mit einem oder mehreren Träger-Abschnitten oder Träger-Teilstücken TRi, i=1...n, die mit den Tragschienen-Abschnitten TSi wie nachfolgend erläutert verbunden sind.

Die Führungsfläche 17a (Gewichtslauffläche 17a) sollte bis auf die dort vorgesehenen Luftaustrittsöffnungen (Luftaustrittsöffnungen 122') möglichst durchgehend geschlossen sein. Auch für die Führungsschiene ist eine ähnliche Anordnung denkbar (bei dieser Konstruktion allerdings nur in der Reckzone notwendig).

Da die erfindungsgemäße Trag- und/oder Laufschiene 17 bevorzugt mit einer Luftlagereinrichtung in Form eines die Trag- und/oder Laufschiene 17 in deren Längsrichtung durchsetzenden (Druck-)Luftkanals 122 versehen ist (wie dies bereits anhand von Figur 2 erläutert wurde), erfordert dies auch eine spezifische Gelenkkonstruktion.

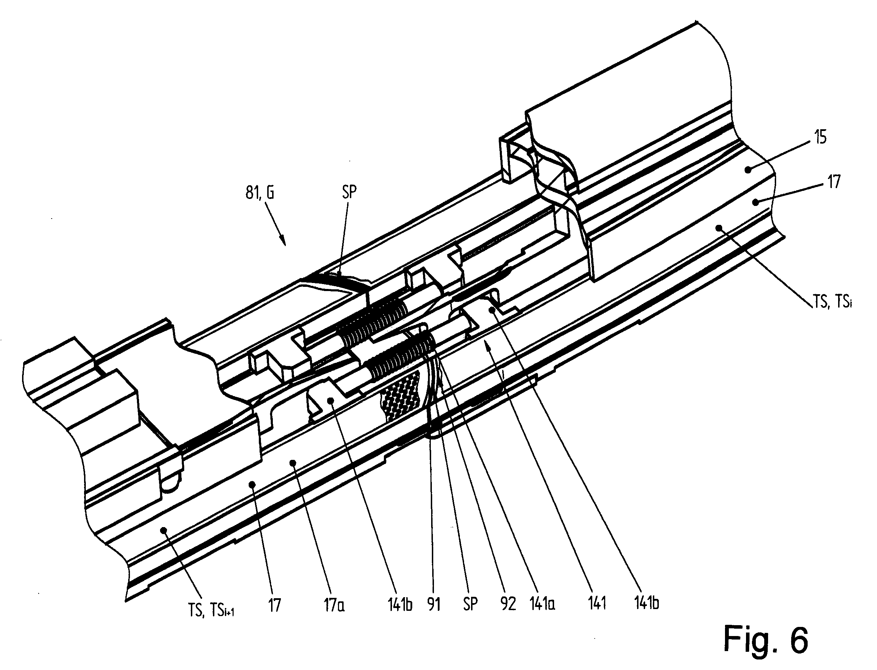

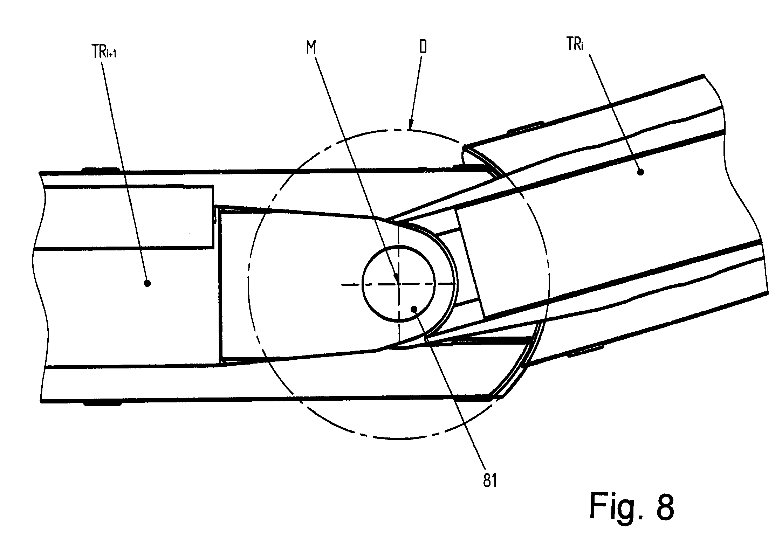

In den Figuren 6, 7 und 8 ist dabei auch mit dem Bezugszeichen G versehen ein Gelenk 81 für die zwei Teilstücke oder Tragschienen-Abschnitte oder -Kammern TSi und TRi der Trag- und/oder Laufschiene 17 wiedergegeben, d.h. ein Gelenkübergang 81 zwischen einem ersten Teilstück TSi zu einem nachfolgenden Teilstück TSi+1 der Trag- und/oder Laufschiene 17.

Zum einen ist daraus zu ersehen, dass die beiden Teilstücke TSi, TSi+1 eine vollständige Trennung voneinander erfordern, weshalb unterschiedliche, die Trennung realisierende Teilaspekte zu berücksichtigen sind.

Zunächst soll auf die Trennung der Tragschiene 17 eingegangen werden, die insoweit auch als Druckluftschiene 17 bezeichnet wird. Wie ausgeführt dient die Oberseite oder Luftaustrittsfläche 17a dieser Trag- oder Laufschiene zur Abstützung der an der Unterseite der Kluppen-Ketteneinheiten KK angebrachten Luftlager-Kissenplatten 140, die nachfolgend teilweise auch als Luftlager-Pads 140 benannt werden, und die damit zur Abstützung der Gewichtskräfte FG im üblichen Betrieb unter Ausbildung des erwähnten Luftkissens 130 beitragen.

Durch die erwähnte Trennung zweier benachbarter Teilstücke 170 in der Trag- oder Laufschiene 17 ist zunächst ein Trennspalt SP gebildet, der in Draufsicht einen Teilkreis um eine zentrale Gelenkachse M bildet. Die Gelenkachse M steht senkrecht zu der Tragschiene-Lauffläche 17a und damit üblicherweise senkrecht zur Filmebene. Die entsprechenden Stirnseiten der beiden Teilstücke der Führungsschiene sind insoweit zum einen konkav und zum anderen konvex entsprechend des Teilkreises gebildet.

Die Spaltbreite des Trennspaltes SP soll möglichst gering sein. Die längs des Spaltes aneinander grenzenden Teilstücke der Tragschiene 17 sind im Bereich der Tragschienen-Fläche 17a mit einer Ab- und einer Anlauffase 91, 92 versehen. Diese Fasen 91, 92 sind so optimiert, dass der Übergang ohne Beschädigung der Luftlagerpads 140, d.h. der Kissenplatten-Tragfläche 139 (nachfolgend auch kurz Padlauffläche 139 genannt) an den Pads 140 und ohne Momenteneinwirkung erfolgen kann.

Ferner wird angemerkt, dass die Tragschienen-Teilstücke TSi, TSi+) und die in diesem Bereich vorgesehene Gelenkverbindung G, 81, 81' durchbiegungsfrei und torsionssteif unter Aufrechterhaltung einer zueinander fluchtenden Tragschienen-Lauffläche (17a) ausgebildet sind.

Zudem ist vorgesehen, dass die Tragschiene 17 bzw. die Tragschienen-Teilstücke TRi, TRi+1 direkt oder unter Zwischenschaltung von Abstandshaltern oder isolierenden Abstandshaltern 42 auf den unteren Tragteilen 99 abgestützt und gehalten sind.

Da wie erwähnt an der Tragschiene 17 ein Luftkanal 122, d.h. eine umlaufende Luftversorgung ausgebildet ist, muss eine separate Verbindungseinrichtung 141 vorgesehen sein, worüber die jeweiligen Abschnitte des Luftkanals 122 in den beiden Teilstücken TSi und TSi+1 über den Spalt SP hinweg miteinander verbunden sind.

Insbesondere aus der Darstellung gemäß Figur 6 ist zu ersehen, dass die beiden Teilstücke TSi und TSi+1 der Trag- und/oder Luftschiene 17 benachbart zu dem Spalt SP mit einem Querkanal-Stück 141a versehen sind, worüber eine Bypass-Leitung 141b, d.h. eine Überbrückungsleitung 141b angeschlossen ist. Mit anderen Worten kann die in dem Luftkanal 122 in dem einen Teilstück TSi der Tragschiene 17 eingebrachte Druckluft dann über eine erste Quer-Kanalleitung 141a zu der Bypass-Leitung 141b und über die Bypass-Leitung 141b und den nachfolgenden nächsten Quer-Kanal 141a in den darauffolgenden Abschnitt des Luftkanals 122 von TSi+1 der Tragschiene 17 weiterströmen. Dabei sind die Stirnseiten der betreffenden Teilstücke der Trag- und/oder Laufschiene 17 benachbart zum Spalt SP abgeschlossen.

Um den erwähnten nahtlosen, exakt fluchtenden Übergang zwischen den beiden Teilstücken 170 der Tragschiene 17 zu gewährleisten, müssen die Trägerstrukturen (wie beispielsweise in Figur 6 zu ersehen), d.h. die aufeinander folgenden Trägerstrukturen TR mit den Teilstücken TRi und TRi+1, an denen die Tragflächen-Konstruktion befestigt ist, mit entsprechender Torsions- und Biegemomenten-Steife verbunden werden. Dazu sind in den Figuren die Gelenkachse M sowie die Trennfugen 94 und 95 unter Ausbildung des Trennspaltes SP in den Trägerteilen eingezeichnet.

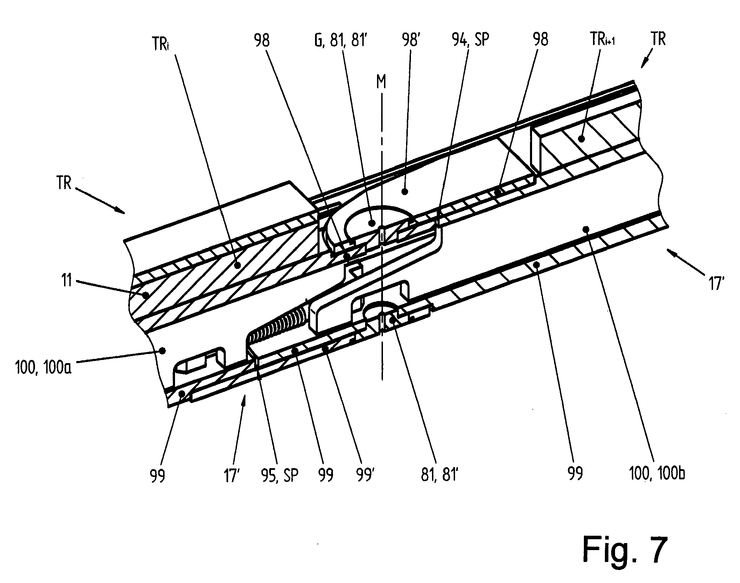

Um eine ausreichende Torsionssteifigkeit und damit auch eine ausreichende Biegemomenten-Festigkeit zu erreichen, ist im Rahmen der Erfindung vorgesehen, dass sich die zur Trägerstruktur TR gehörenden und zu der Tragschienen-Lauffläche 17a parallel verlaufenden und daher vertikal zueinander versetzt liegenden Trägerplatten-Gelenkabschnitte 98' und 99' mit der zugehörigen Trägerkonstruktion 98 und 99 in Parallellage dazu überlappen. Dabei ist beispielsweise aus Figuren 6 und 7 zu ersehen, dass das jeweils obere und untere Tragteil 98, 99 über jeweils zumindest eine Verstärkungsrippe 100 fest miteinander verbunden sind.

Daneben können aber auch noch weitere Maßnahmen vorgesehen sein, um die gewünschten Effekte und Vorzüge noch weiter zu verstärken oder zu unterstützen.

### Ausführungsformen des Luftkissens sowie der zugehörigen Unterseite der Kluppen-Ketteneinheiten

Durch die Gelenke in den konkaven und konvexen Kurvenabschnitten und die Kettenräder ist eine variable Ausgestaltung der Luftlager-Kissen notwendig.

Nachfolgend wird dabei auf ein erstes entsprechendes Ausführungsbeispiel eingegangen, aus dem eine Verstellmöglichkeit der Luftlager-Kissenplatten 140 zu ersehen ist.

Die Luftlager-Kissenplatten oder Luftlager-Pads 140 und damit die Kissenplatten-Tragflächen, also die sogenannten Padlaufflächen 139 sind in Abschnitten der Kluppen-Ketteneinheiten KK der umlaufenden Bahn 2 für die Transportkette 13 in relativ zueinander verschiebbare oder verdrehbare Gewichtslaufflächen-Elemente 140, also in sogenannte Luftlager-Kissenplatten oder Luftlager-Pads 140p unterteilt, also in entsprechende Einzelelemente 140p.

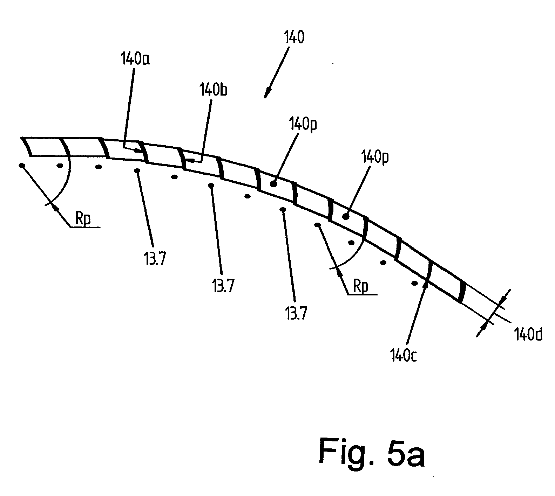

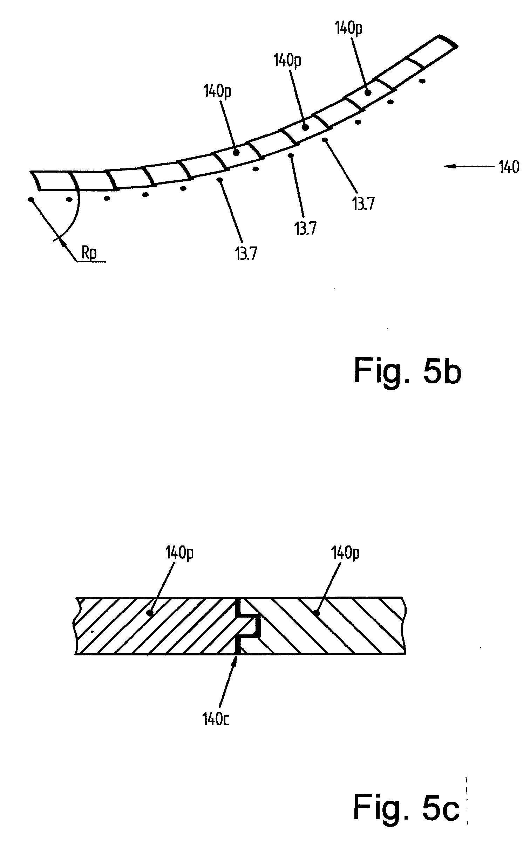

Sind die einzelnen in vorlaufender wie in nachlaufender Richtung der Luftlager-Pads 140p ausgebildeten Begrenzungsflächen 140a, 140b in Draufsicht kreissegmentförmig mit Radius Rp gestaltet, so eröffnet dies die Möglichkeit, beispielsweise jeweils zwei aufeinanderfolgende und mit Luft beaufschlagte Luftlagerelement-Abschnitte 140, die nach Art von Luftlager-Pads 140p ausgebildet sind, relativ seitlich zueinander zu verschieben und dabei leicht zu verdrehen, wodurch beispielsweise aus einem geraden Bahnabschnitt ein gekrümmter Bahnabschnitt eingestellt werden kann, wie dies in schematischer Draufsicht in Figuren 5a und 5b für konvexe bzw. konkave Kurvenabschnitte zu ersehen ist.

Dabei sind ferner in Figuren 5a und 5b noch die Kettenbolzen 13.7 eingezeichnet, um beispielhaft zu zeigen, in welche Richtung die Verstellung vorgenommen werden kann (grundsätzlich nämlich in beide Richtungen, wie dies aus den Ansichten gemäß Figuren 5a und 5b entnommen werden kann).

Die beiden in Draufsicht kreissegmentförmig gestalteten Anlage- oder Begrenzungsflächen 140a, 140b zweier benachbarter bzw. aufeinander folgender Luftlager-Pads 140p bilden also letztlich eine dazwischen liegende Trennfuge oder einen Trennspalt 140c, der beliebig klein sein kann und gegen Null tendiert, da die Begrenzungs- oder Anlageflächen 140a, 140b sich vollflächig berühren und relativ zueinander gleitend gelagert sind. Mit anderen Worten sind also die Trennfugen 140c oder die Trennspalte 140c der Luftlager-Pads 140p möglichst klein gefertigt, um somit auch die Leckströme möglichst gering zu halten. Die Trennspalten 140c sollen dabei kleiner als 2 mm, insbesondere kleiner als 1,5 mm, 1 mm, 0,75 mm, 0,5 mm und insbesondere kleiner als 0,25 mm sein. Natürlich ist es auch möglich die Trennfuge 140c zweier benachbarter Pads mit einer meanderförmigen, d.h. mit einer Feder-Nut-Verbindung auszuführen, wie das beispielhaft in der Figur 5c skizziert ist. Dadurch ergibt sich letztlich eine geschlossene Gleitfläche 139, d.h. eine mehr oder weniger geschlossene Kissenplatten-Tragfläche (Pad-Lauffläche) 139, die zusätzlich verhindert, dass über den Strömungskanal 122 und die dort vorgesehenen Austrittsöffnungen 122' austretende Luft durch die erwähnte Trennfuge oder Trennspalte 140c ungehindert abströmen kann.

Grundsätzlich sind die Luftkissen-Breiten 140d, d.h. die Breitenmaße 140d der Luftlager-Pads 140p so gestaltet, dass eine weite Überlappung der Luftkissen-Tragfläche 139 über die Breite der mit Austrittsöffnungen 122' und einer entsprechenden Perforation 122" versehenen oben liegenden Kanalwand 122a des Strömungskanals 122 vorgesehen ist, und zwar insbesondere auch im Bereich der Gelenke G sowie der Kettenräder in der Ein- und Auslaufzone.

Möglich ist auch (wie beispielsweise in Figur 4a angedeutet ist), dass die Luftaustrittsöffnungen nur in einem Luftaustrittsbereich 122b mit einer Luftaustrittsbreite 122c vorgesehen sind, der grundsätzlich schmäler ist als die Gesamtbreite der Tragschienen-Lauffläche 17a. Wesentlich ist, dass die Breite der Luftkissen-Tragflächen 139 zumindest breiter ist als die Laufaustrittsbreite 122c der Tragschiene 17. Mit anderen Worten sollte die Luftkissen-Breite 140d der Luftkissen-Pads 140p (also der Luftlager-Kissenplatten 140) zumindest um 10%, vorzugsweise um mehr als 20%, 30%, 40% oder mehr als 50% breiter sein als die Luftaustrittsbreite 122c oder die Breite der Tragschienen-Lauffläche 17a (Figur 4a).

### Umlaufendes Luftlager auch bei den Kettenrädern

Die Tragschiene 17 und/oder die Kissenplatten-Tragfläche 139, d.h. insbesondere auch die entsprechende Padlauffläche 139 an den einzelnen Luftlager-Pads 140p bleiben auch im Bereich der Kettenräder 51 durchgängig. Dadurch sind gegenüber dem Stand der Technik keine Schiebestücke zum Hubausgleich notwendig. Die Luftlage-Anordnung mit den Luftlage-Kissenplatten 140 und den einzelnen Luftlager-Kissen oder -Pads 140p bildet also eine konvexe, segmentkreisförmige Form über der porösen und/oder mit Luftaustrittsöffnungen versehenen Trägerstruktur aus.

Die Führungsschiene 15 ist im Bereich der Kettenräder nicht notwendig. Die Ab- und Anläufe sind allerdings konstruktionsseitig mit einer zwangsweisen Tangentialsynchronisation ausgeführt.

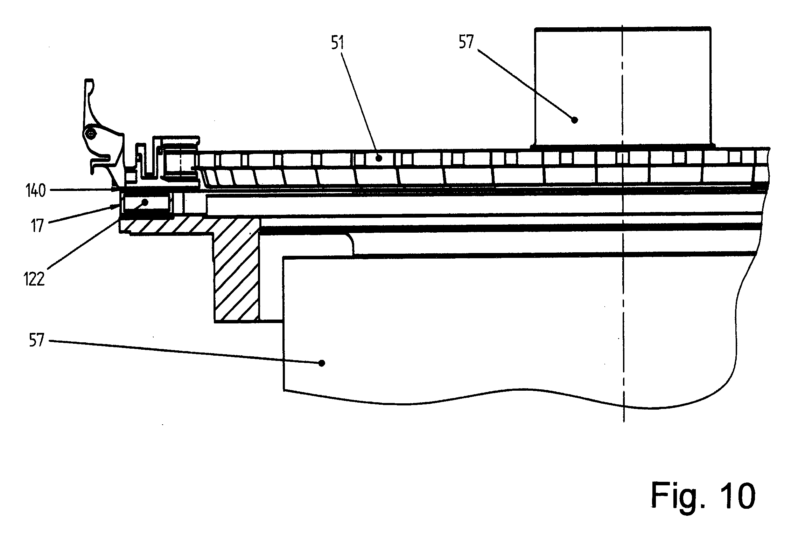

Schließlich soll der Vollständigkeit halber auch noch erwähnt werden, dass die erwähnten Kettenräder 51 am Auslauf und/oder am Einlauf vorzugsweise so gestaltet sind, dass die Kettenräder 51 direkt mit einem Vollwellenmotor 57 zusammenwirken bzw. darüber angetrieben werden, wie dies beispielhaft in der Seitendarstellung bzw. Querschnittsdarstellung gemäß Figur 10 zu ersehen ist.

### Zusätzliche Entkopplung der Kräfte

Ergänzend kann im Rahmen der Erfindung ferner vorgesehen sein, dass im Gegensatz zum Stand der Technik bei dem erfindungsgemäßen Transportsystem zusätzlich eine im Idealfall vollständige, d.h. 100%ige Entkopplung der vertikalen und horizontalen Kräfte stattfindet. In Verbindung mit der Gewichts- und Schwerpunktverteilung einer Leichtbauweise der Kluppen-Ketteneinheiten KK und damit der gesamten Transportkette kann darüber hinaus eine weitere Optimierung der Transportkette bzw. des Transportsystems erfolgen. Das führt zu einer erheblichen Energieeinsparung und zu einer Erhöhung der Transportgeschwindigkeit und erhöhter Filmproduktion.

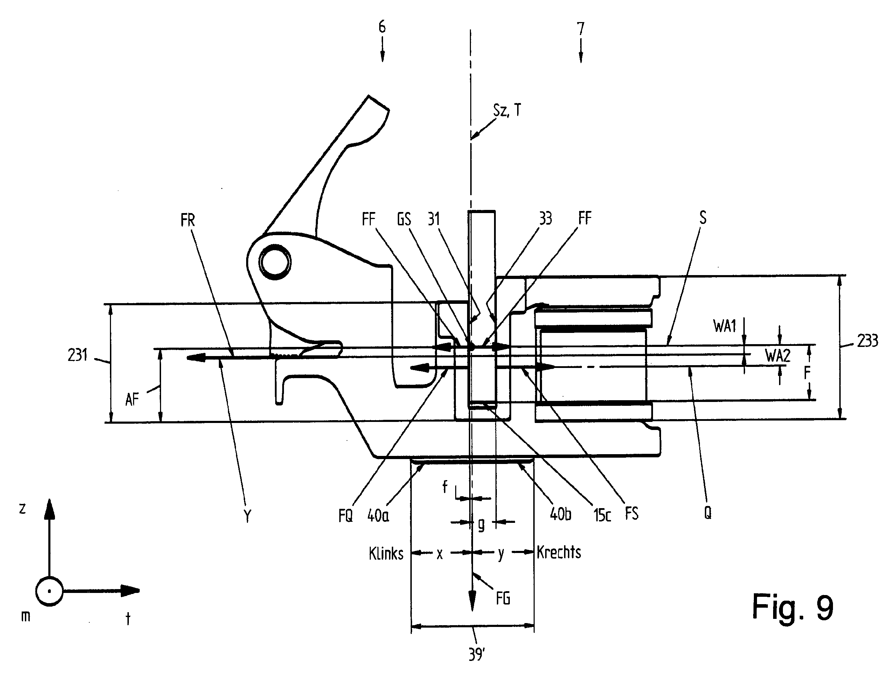

Im Rahmen einer Weiterbildung der Erfindung wird dazu angestrebt, dass zumindest das Gewicht der Kluppenteile 6 und der Transportteile 7 symmetrisch zu einer virtuellen Gewichtssymmetrie-Ebene Sz (Figur 9, wobei in Figur 9 mit m eine Koordinate entlang der Führungsschiene 15, mit t eine Koordinate senkrecht zur Führungsschiene 15 und mit z der Normalenvektor auf m und t eingezeichnet sind, so dass die durch die Koordinaten m-z gebildete Ebene die durch den Schwerpunkt GS verlaufende Gewichtssymmetrie-Ebene Sz bildet) ausbalanciert verteilt wird. Im Falle der Transportketten-angetriebenen Kluppen heißt dies, dass hier eine ausbalancierte Gewichtsverteilung zwischen dem Kluppenkörper, d.h. den Kluppenteilen 6 und den Transportteilen 7 bestehen soll.

Das jeweilige Kluppenteil 6 und das damit verbundene Kettenteil 7 sollen also mehr oder weniger gewichtsmäßig ausbalanciert sein.

Mit anderen Worten ist also das (das Gesamtgewicht des Kluppenkörpers ergebende) Gewicht des Kluppenteils 6 und das Gewicht des Ketten- bzw. des Transportteils 7 symmetrisch zur virtuellen Gewichtssymmetrie-Ebene Sz und daher möglichst gleich bezogen auf die Gewichtslauffläche 39 verteilt, wobei die virtuelle Gewichtssymmetrie-Ebene Sz durch den Schwerpunkt GS und dabei parallel zu den Laufflächen 31, 33 des Gleitschuhs 29a verläuft. Dadurch soll sichergestellt werden, dass zum einen keine Verkipp- oder Verdrehmomente durch eine unsymmetrische Gewichtsverteilung der Transportkette 13 und/oder der Kluppen-Ketteneinheiten KK erzeugt werden, und dass zum anderen die Flächenpressung an der Kissenplatten-Tragfläche 139 möglichst symmetrisch zu der Gewichtssymmetrieachse oder Gewichtssymmetrie-Ebene Sz verteilt ist, um den Luftverbrauch zu minimieren und die Funktionalität des Luftlagers 130 zu optimieren. Durch die Gesamtanordnung wird also sichergestellt oder zumindest weitgehend sichergestellt, dass an der Transportkette und dem Kluppenkörper, wie erwähnt, keine Verkipp- oder Drehmomente angreifen, die ansonsten zu hohem Luftverbrauch und evtl. zu Kontakt zwischen den Luftlager-Pads 140 bzw. 140p und den Luftaustrittsöffnungen 122' in der Tragschiene 17 führen würden.

In Figur 9 ist dabei der Schwerpunkt GS der Kluppen-Ketteneinheit KK für eine Transportketten-angetriebene Querreckanlage eingezeichnet, der im gezeigten Ausführungsbeispiel im Bereich des Führungsschienen-Gleitkörpers 29, d.h. in dessen mittleren Bereich zu liegen kommt. Hier setzt die Gewichtskraft FG an, deren Vektor in Figur 9 eingezeichnet ist. Dieser Gewichtskraft-Vektor FG liegt dabei in einer senkrecht zur Zeichenebene verlaufenden virtuellen Gewichtssymmetrie-Ebene Sz durch den Schwerpunkt GS. Der Gewichtskraft-Vektor FG bzw. die virtuelle Gewichtssymmetrie-Ebene Sz verläuft dabei mittig und symmetrisch zu der an der Unterseite 25f des Kluppenmechanismus 25 vorgesehenen Luftlager-Kissenplatte 140 und schneidet dabei die Padlauffläche 139 und/oder die Tragschienen-Lauffläche 17a senkrecht.

Ferner ist die Schwerpunkt-Ebene Sz parallel zur m-z-Ebene innerhalb der Dicke der Führungsschiene 15 angeordnet, wobei in Figur 9 mit f der horizontale Abstand zwischen der vertikal verlaufenden Schwerpunkt-Ebene Sz zur vertikal verlaufenden Kettenkraft-Lauffläche 31a und mit g der horizontale Abstand zur vertikal verlaufenden Reckkraft-Lauffläche 33a eingezeichnet ist, also die Werte f und g ≥ 0 sind. Die Gleitelemente der Gewichtskraftführung liegen weit außerhalb dieser Schwerkraft-Ebene, so dass keine Kippmomente auftreten können. Das Gleitelementsystem ist ferner so optimiert, dass gleiche oder nahezu gleiche Flächenpressungen symmetrisch zur Schwerkraft-Ebene Sz entweder durch die Abstände x, y (Fig. 9) oder durch unterschiedliche Flächengrößen erreicht werden.

Die maximale Erstreckungsbreite 39' der Luftlager-Pads 140p, 140 ist beispielsweise in Figur 9 eingezeichnet. Sie entspricht der Summe aus den Werten x + y, wobei x der Abstand zwischen der vertikalen Schwerpunktebene Sz zu dem entferntesten Punkt 40a' des Luftlager-Pads 140p, 140 auf der Kluppenseite und die Strecke y der Abstand von der Schwerpunktebene Sz zu dem entferntesten Punkt 40b' des Luftlager-Pads 140p, 140 auf der Kettenseite darstellt. Die Schwerpunktebene Sz soll dabei bevorzugt die maximale Erstreckungsbreite 39' (= x + y) mittig durchsetzen. Sollte die Schwerkraftebene Sz diese maximale Erstreckungsbreite bezogen auf die Luftlager-Pads 140p, 140 nicht mittig durchsetzen, so dass der Seitenabstand x unterschiedlich ist zu dem Seitenabstand y, dann sollten die Luftlager-Pads 140p, 140 in ihrer Breite so bemessen sein, dass die Flächenpressungen bezogen auf die Schwerpunktebene Sz gleich sind. Mit anderen Worten sollten also die an den entferntest liegenden Punkten 40a' bzw. 40b' (s Figur 9) ansetzenden (gleich großen) Teil-Gewichtskräfte links bzw. rechts bezogen auf die Schwerpunktebene Sz so verlaufen, dass der Abstand x ungleich dem Abstand y ist, so soll auch in diesem Fall sichergestellt sein, dass die Flächenpressungen links und rechts der Schwerpunktebene Sz gleich sind, was zur Folge hat, dass die Kluppen-Ketteneinheit KK nicht kippt.

Alle weiteren an der Transportkette, deren Einzelgliedern bzw. deren Kluppen-Ketteneinheiten KK ansetzenden Kräfte sind aufgrund des im Rahmen der Erfindung gewählten Konstruktionsprinzips senkrecht zu der Gewichtskraft FG ausgerichtet. Dabei sind diese weiteren Kräfte aber nicht nur senkrecht zur Gewichtskraft FG ausgerichtet, sondern greifen mehr oder weniger in gleicher oder in annähernd gleicher Höhenlage an den betreffenden Kluppen-Ketteneinheiten KK und damit an der Transportkette an, wodurch sichergestellt ist, dass durch diese Querkräfte kein zusätzliches Kipp- oder Drehmoment auf den Kluppenkörper und damit auf die Transportkette eingeleitet wird, um auch hier nicht zu einer Erhöhung der Reibwirkung beizutragen.

Die Schwerpunkt-Ebene Sz bei der anhand von Figur 9 gezeigten Ausführungsform einer Querreckanlage unter Verwendung einer Transportkette befindet sich zudem innerhalb der Breite der Führungsschiene 15. Diese Schwerpunkt-Ebene Sz kann genauso aber auch außerhalb der Führungsschiene 15 verlaufend angeordnet sein, wenn nämlich der Schwerpunkt außerhalb der Führungsschiene 15 liegt. Vorteilhaft ist dabei, wenn die durch den Schwerpunkt FG verlaufende Schwerpunktebene Sz die entsprechende Tragfläche 17a sowie die maximale Erstreckungsbreite 39' der Luftlage-Pads 140p, 140 schneidet, hier also eine drehmoment- und kippfreie ausbalancierte Anordnung gegeben ist. Die Reckkraft FR greift in der Reckkraftebene (m-t-Ebene durch die Filmlage) an. Die Fliehkräfte FF greifen in der durch den Schwerpunkt GS verlaufenden horizontalen Fliehkraftebene S (m-t-Ebene durch GS) an. Die Kettenlängskräfte FKi bewirken je nach Kurvenabschnitt eine Querkraft FQ bzw. eine Seitenführungskraft FS, die an der Q-Ebene angreifen.

Alle weiteren an der Transportkette 13, d.h. an deren Einzelgliedern wie den Kluppenteilen 6 und den Kettenteilen 7 ansetzenden Kräfte sind aufgrund des im Rahmen der Erfindung gewählten Konstruktionsprinzips senkrecht zu der Gewichtskraft FG ausgerichtet. Dabei sind diese weiteren Kräfte aber nicht nur senkrecht zur Gewichtskraft FG ausgerichtet, sondern greifen mehr oder weniger in gleicher oder in annähernd gleicher Höhenlage an dem betreffenden Kluppenkörper und damit an der Transportkette an, wodurch sichergestellt ist, dass durch diese Querkräfte kein zusätzliches Kipp- oder Drehmoment auf den Kluppenkörper und damit auf die Transportkette eingeleitet wird, um auch hier nicht zu einer Erhöhung der Reibwirkung beizutragen.

Dabei können - wie aus den Zeichnungen ersichtlich ist - die Höhe der Kettenkraft-Lauffläche 31a und die Höhe der Reckkraft-Lauffläche 33a durchaus unterschiedlich ausgebildet sein. Entscheidungserheblich ist lediglich, dass die hierauf einwirkenden, senkrecht zu den Gewichtskräften FG wirkenden Reck-, Quer-, Seitenflächen- und/oder - Fliehkräfte im Bereich der Kettenkraft-Lauffläche 31a bzw. der Reckkraft-Lauffläche 33a ansetzen und dabei vor allem die zugehörigen Vektoren in einer gemeinsamen oder nahe zueinander liegenden Ebene wirken, so dass ansonsten auftretende Kipp- oder Drehmomente, die auf den Kluppenkörper 6 und damit auf die Transportkette 13 einwirken könnten, vermieden oder doch soweit als möglich minimiert werden.

Von daher ist in den Zeichnungen auch noch eine Kettenkraft-Laufflächenhöhe 231 und eine Reckkraft-Laufflächenhöhe 233 eingezeichnet (beispielsweise Figur 9), die die jeweilige Höhe oder wirksame Höhe von dem untersten bis zum obersten Punkt der jeweiligen Gleitfläche 31a bzw. 33a beschreiben (diese Gleitfläche muss vom untersten bis zum obersten Punkt nicht durchgängig sein, sondern kann unter Ausbildung eines freien Zwischenraumes beabstandet zueinander ausgebildete Gleitflächen aufweisen). Entscheidungserheblich ist nur die wirksame Gesamthöhe der jeweiligen Kettenkraft- bzw. Reckkraft-Laufflächenhöhe 231 bzw. 233, die sich an der entsprechenden Lauf- oder Außenfläche 15a, 15b der Führungsschiene 15 abstützt, hiermit also wechselwirkt. In diesem Bereich sollen nämlich mit Ausnahme der Gewichtskraft FB alle senkrecht dazu verlaufenden weiter auftretenden Kräfte einwirken, so dass hier ebenfalls an der Führungsschiene keine Kipp- und Drehmomente eingeleitet werden können. Mit anderen Worten sollen alle hier senkrecht auf die Führungsflächen bzw. Gleitflächen einwirkenden Kräfte kipp- und drehmomentfrei an der Führungsschiene abgestützt werden, ebenso wie die Gewichtskraft FG, die hierzu senkrecht wirkt und kipp- und drehmomentfrei an der Trag- und Gewichtsschiene 17 abgestützt werden soll, indem auch dieser Gewichtsvektor die entsprechende Lauffläche 17a der Tragschiene 17 im Bereich der dort ausgebildeten wirksamen Gleitfläche schneidet.

Das erläuterte Transportsystem zeichnet sich dabei unter anderem auch dadurch aus, dass die Kluppen-Ketteneinheit KK so ausgebildet ist, dass
- die Fliehkraft-Ebene S in einem Schwerkraft-Wirkabstand WA1 parallel zur Reckkraft-Ebene Y verläuft,
- die Querkraft- oder Seitenführungskraft-Ebene Q in einem Kraftwirkabstand WA2 parallel zur Reckkraft-Ebene Y verläuft, und
- ein zwischen der Schwerkraft-Ebene S und der Unterkante 15c der Führungsschiene 15 vorgesehener Abstand AF zumindest zweimal so groß und vorzugsweise zumindest dreimal, viermal oder zumindest fünfmal so groß ist wie der größte der beiden Wirkabstände WA1 oder WA2.

Ebenso kann das Transportsystem aber auch so ausgebildet sein, dass die Kluppen-Ketteneinheit KK und die Führungsschiene 15 so ausgebildet sind, dass
- die Fliehkraft-Ebene S und/oder die Querkraft- oder Seitenführungskraft-Ebene Q mit der Reckkraft-Ebene Y zusammenfallen, und
- ein Abstand AF zwischen der Fliehkraft-Ebene S und der Unterkante 15c der Führungsschiene 15 so bemessen ist, dass dieser zumindest 1 mm, vorzugsweise zumindest 5 mm, 10 mm, 20 mm, 30 mm, 40 mm, 50 mm oder mehr beträgt.

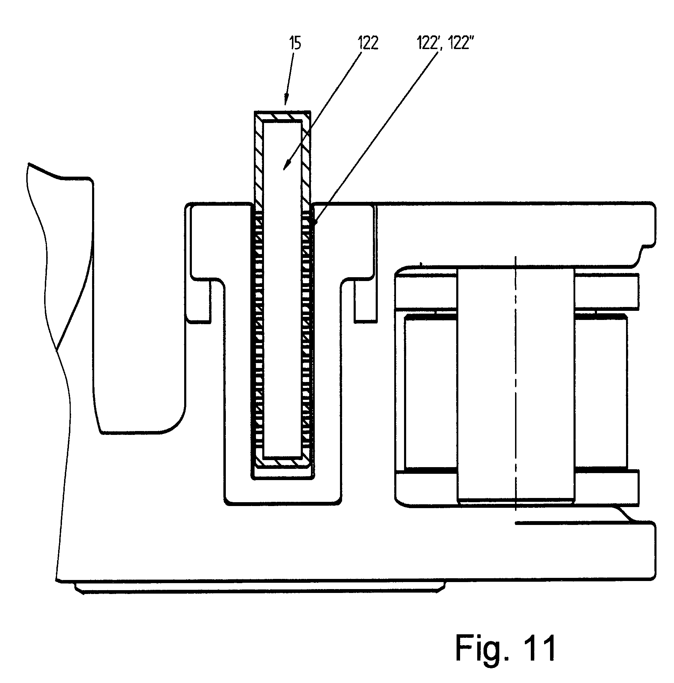

Abschließend wird angemerkt, dass die anhand der Tragschiene 17 erläuterte Lagerung der Kluppen-Ketteneinheiten KK mittels eines Luftpolsters oder Luftkissens 130 grundsätzlich ergänzend, also zusätzlich, oder alternativ auch im Rahmen der Führungsschiene vorgesehen sein kann. Denn es ist genauso möglich, dass die Führungsschiene 15 mit einer rechteckförmigen Gehäusewandung unter Ausbildung eines innenliegenden und längs verlaufenden Kanals 122 ausgebildet ist, über welchen Druckluft zugeführt wird. Wie Figur 11 zeigt, können dazu Luftaustrittsöffnungen 122', 122" beispielsweise an den Lauf- oder Austrittsflächen 15a, 15b an der Führungsschiene 15 ausgebildet sein, so dass sich hier jeweils ein gegebenenfalls dünnes Luftpolster oder ein Luftkissen 130 ausbildet, nämlich gegenüber der jeweiligen Gleitfläche 31a bzw. 33a an der Gleitlagerung 29 z.B. in Form des sogenannten Gleitschuhs 29a, worüber dann die Kluppen-Ketteneinheit KK an der Führungsschiene 15 gelagert ist. Dabei kann die Gleitlagerung 29 von der Gestaltung, Größe und/oder Materialwahl oder Zusammensetzung genauso gestaltet sein, wie dies grundsätzlich anhand der Kissenplatten 140, d.h. der sogenannten Luftlager-Pads 140p erläutert wurde. Die in diesem Zusammenhang gemachten Ausführungen gelten gleichermaßen auch für die Ausgestaltung der Lagerungen 29. Soweit im Zusammenhang mit den Lagerpads Bezug genommen worden ist auf die Laufaustrittsbreite 122c der Tragschiene 17 bzw. die Breite der Tragschiene oder der Tragschienen-Lauffläche 17a selbst bzw. die Breite der Kissenplatten 140, d.h. der Luftlager-Pads 140p kommt es im Falle der Führungsschiene auf die Luftaustrittsbreite in vertikaler Höhenrichtung der Führungsschiene 15 an, sowie auf die in Vertikalrichtung verlaufende Höhe der damit zusammenwirkenden Gleitelemente 31 bzw. 33.

Dabei kann auch vorgesehen sein, dass bei der Tragschiene aber auch bei der Führungsschiene die entsprechende Luftlagerung nur auf Teilstrecken vorgesehen ist. Insbesondere für die Führungsschiene bietet sich an eine Luftlagerung z.B. nur in der eigentlichen Reckzone vorzusehen.

Mit anderen Worten kann das erfindungsgemäße System unter Ausbildung einer oder mehrerer Luftpolster an einer Monorail, also an einer einzigen Schiene ausgebildet sein, die als Trag- und Führungsschiene dient. Das erfindungsgemäße System kann aber auch bei einer zweiteiligen Schienenanordnung beispielsweise unter Verwendung einer Führungsschiene 15 und einer vor allem das Traggewicht der Transportkette aufnehmenden Tragschiene 17 gestaltet sein, wobei in diesem Falle ein entsprechendes Luftpolster 130 beispielsweise über die Tragschiene 17 erzeugt werden kann und/oder beispielsweise bevorzugt zwei Luftpolster 130 im Bereich der Führungsschiene in Wechselwirkung zu den beiden Gleitflächen 31a, 33a der Kluppen-Ketteneinheit KK erzeugt werden können. Mit anderen Worten ist die Ausbildung derartiger Luftsysteme entweder bei der Tragschiene 17 oder der Führungsschiene 15 oder bei derart getrennten Schienenanordnungen sowohl bei der Tragschiene 17 als auch bei der Führungsschiene 15 möglich. Einschränkungen und Abwandlungen bestehen insoweit nicht.

### Beschreibung der Verbundwerkstoffe, insbesondere der Faserverbundwerkstoffe

In all diesen Ausführungsbeispielen können aber die Kluppen-Transporteinheiten KT, d.h. der eigentliche Kluppenteil und/oder das eigentliche Transportteil anhand der bereits eingangs beschriebenen Ausführungsbeispiele dadurch verbessert werden, dass die entsprechenden Teile volumenmäßig zu mehr als 25%, insbesondere zu mehr als 30%, 40%, 50%, 60%, 70%, 80% oder sogar zu mehr als 90% aus Verbundwerkstoffen, insbesondere langfaserigen Verbundwerkstoffen bestehen oder diese umfassen, alleine oder in Kombination mit weiteren Materialien.

Was unter Verbundwerkstoffen in der Fachwelt zu verstehen ist, kann beispielsweise aus Wikipedia (https://de.wiki-pedia.org) entnommen werden. Danach werden unter Verbundwerkstoffen alle Materialkombinationen aus zwei oder mehreren Materialien verstanden. Meist besteht ein Verbundwerkstoff aus einer sogenannten Matrix, in die ein oder mehrere andere Werkstoffe, sogenannte Eigenschaftskomponenten, eingebettet sind. Die Komponenten eines Verbundwerkstoffs können dabei selbst wieder Verbundwerkstoffe sein. Der Verbundwerkstoff besitzt verbesserte Werkstoffeigenschaften als seine einzelnen Komponenten. Möglich sind Teilchenverbundwerkstoffe, Faserverbundwerkstoffe, wie eine glasfaserverstärkte Matrix, Metallmatrix-Verbunde (MMC), bevorzugt langfaserige, kohlefaserverstärkte Matrizen, eigenverstärkte Thermoplaste, aramidfaserverstärkter Kunststoff (AFK), Faser-Keramik-Verbunde (Ceramic Matrix Composites (CMC)), Schichtverbundwerkstoffe; TiGr-Composite, Faserverstärktes Aluminium, Sandwich-Konstruktionen, Bimetal-1e, Hylite, eine Sandwich-Struktur aus einer Kunststoffplatte, die zwischen zwei Aluminiumplatten/-folien eingebettet ist, und Keramik-Faser Verbundwerkstoffe.

Bei den Verbundwerkstoffen handelt es sich also grundsätzlich um einen Mehrfasen- oder Mischwerkstoff. Ein Faserverbundwerkstoff besteht dabei im Allgemeinen aus zwei Hauptkomponenten, nämlich einer bettenden Matrix sowie verstärkenden Fasern.

Aus der stofflichen Einteilung der Werkstoffe in polymere (Kunststoffe), metallische, keramische und organische Werkstoffe ergeben sich die grundsätzlichen Kombinationsmöglichkeiten für Verbundwerkstoffe. Dabei wird anwendungsspezifisch versucht, die unterschiedlichen Vorteile der einzelnen Werkstoffe im Endwerkstoff zu kombinieren und die Nachteile auszuschließen.

Die Matrix aber auch die Eigenschaftskomponenten können aus Metallen, wie etwa Aluminium, Magnesium usw., aus Polymeren (Thermo-Duroplaste, Harze wie Polyesterharz, Polyurethanharz (Polyurethane), Epoxidharz, Silikonharz, Vinylesterharz, Phenolharz, Acrylharz (PMMA) usw. oder aus Kombinationen davon bestehen.

Bevorzugt werden Faserverbundwerkstoffe, insbesondere langfaserige Faserverbundwerkstoffe, eingesetzt. Grundsätzlich ist aber auch die Verwendung von Teilchenverbundwerkstoffen, Schichtverbundwerkstoffen, Durchdringungsverbundwerkstoffen und Strukturverbundwerkstoffen möglich. Die Fasern können in einer oder mehreren bestimmten Richtungen verlaufen bzw. Vorzugsrichtungen haben. Faserverbundwerkstoffe können schichtweise hergestellt werden.

Bekanntermaßen verleiht die Matrix dem Verbundwerkstoff und insbesondere dem Faserverbundwerkstoff sein Aussehen. Diese Matrix dient dabei ferner dazu, die verstärkenden Fasern in ihrer Position zu halten und die entsprechenden Kräfte und Spannungen aufzunehmen und zu verteilen. Gleichzeitig schützt die Matrix die Fasern vor äußeren Einflüssen, insbesondere auch mechanischen und chemischen Einflüssen.

Die Fasern verleihen dem Faserverbundwerkstoff die notwendige Festigkeit einschließlich der benötigten Zugfestigkeit und/oder Biegefestigkeit.

Als Matrix kommen beispielsweise leichte Materialien, unter anderem wie Aluminium oder Magnesium, in Betracht. Aber auch andere Metalle können als Matrix eingesetzt werden. Ebenso können verschiedene Keramiken als Matrix für entsprechende Verbundwerkstoffe, d.h. insbesondere Faserverbundwerkstoffe, verwendet werden. Schließlich soll in diesem Zusammenhang auch erwähnt werden, dass Kohlenstoff sowie kohlenstofffaserverstärkter Kohlenstoff (CFC) zur Anwendung gelangen kann.

Ansonsten werden bevorzugt für Faserverbundwerkstoffe Faserkunststoff-Verbundwerkstoffe verwendet, bei denen als Matrix Polymere eingesetzt werden, nämlich beispielsweise
- Duromere (Duroplaste, Kunstharz etc.)
- Elastomere
- Thermoplaste.

Die Verbindung der Verbundwerkstoffe (Matrix und Eigenschaftskomponente) erfolgt mit den üblichen Verfahren, wie Spritzguss, Einlegetechnik, Vakuumverguss usw. Die Härtung und Verpressung des Verbundes (z.B. prepregs) erfolgt im Vakuum und Autoklaven mit den üblichen Verfahren, wie etwa prepreg oder RTM (resin transfer molding) Verfahren.

## Patentansprüche

1. Transportsystem, insbesondere Reckanlage mit folgenden Merkmalen:
- es ist zumindest eine Führungsbahn (2) vorgesehen,
- auf dieser Führungsbahn (2) ist eine Transportkette (13) umlaufend angeordnet,
- die Führungsbahn (2) umfasst dazu eine Führungsschiene (15),
- die Transportkette (13) umfasst eine Vielzahl von gelenkig miteinander verbundenen Kettengliedern,
- es sind Kluppen-Ketteneinheiten (KK) vorgesehen, die in ein Kluppenteil (6) und in ein Kettenglieder umfassendes Kettenteil (7) gegliedert sind,
- es ist ferner eine die Gewichtskraft (FG) der Kluppen-Ketteneinheit (KK) aufnehmende Tragschiene (17) vorgesehen,
**gekennzeichnet durch** die folgenden weiteren Merkmale:
- die Tragschiene (17) oder die Führungsschiene (15) oder die Trag- und die Führungsschiene (17, 15) ist bzw. sind mit einem die Tragschiene (17) bzw. die Führungsschiene (15) in Längsrichtung zumindest in einer Teillänge durchsetzenden Kanal (122) versehen,
- die Tragschienen-Lauffläche (17a) umfasst eine Vielzahl von darin eingebrachten Austrittsöffnungen (122'), **durch** die Druckluft über den Kanal (122) unter Erzeugung eines Luftkissens (130) zwischen der Tragschienen-Lauffläche (17a) und einer Luftlager-Kissenplatte (140) an der Kluppen-Ketteneinheit (KK) zuführbar ist und/oder
- die Laufschienen-Laufflächen (31a, 31b) umfassen eine Vielzahl von darin eingebrachten Austrittsöffnungen (122'), **durch** die Druckluft über den Kanal (122) unter Erzeugung eines Luftkissens (130) zwischen der jeweiligen Führungsschienen-Lauffläche (31a, 33a) und einer Lagereinrichtung (139) an der Kluppen-Ketteneinheit (KK) zuführbar ist.

2. Transportsystem nach Anspruch 1, **dadurch gekennzeichnet, dass** die Austrittsöffnungen (122') ein Durchmessermaß aufweisen, welches kleiner als 1 mm, insbesondere kleiner als 0,9 mm, 0,8 mm, 0,7 mm, 0,6 mm, 0,5 mm, 0,4 mm, 0,3 mm, 0,2 mm, insbesondere kleiner als 0,1 mm ist.

3. Transportsystem nach Anspruch 1 oder 2, **dadurch gekennzeichnet, dass** die Austrittsöffnungen (122') aus einer Perforation (122") bestehen oder in Form einer porösen Tragschienen-Lauffläche (17a) ausgestaltet sind.

4. Transportsystem nach einem der Ansprüche 1 bis 3, **dadurch gekennzeichnet, dass**
a) die Luftlager-Kissenplatten (140) eine Breite quer zur Vorschubrichtung aufweisen, die größer ist als die Breite der Tragschiene (17) oder größer ist als die Luftaustrittsbreite (122c) innerhalb der die Luftaustrittsöffnungen (122') in der Tragschienen-Lauffläche (17a) ausgebildet sind, oder
b) dass die den Führungsschienen-Laufflächen (31a, 31b) zugeordneten Gleitlagerungen (29; 31, 33) ein Höhenmaß quer zur Vorschubrichtung aufweisen, welches größer ist als die Luftaustrittsbreite (122c) in der Führungsschiene (15), wobei die Luftaustrittsöffnungen (122') innerhalb der Luftaustrittsbreite (122c) vorgesehen sind.

5. Transportsystem nach einem der Ansprüche 1 bis 4, **dadurch gekennzeichnet, dass** die Tragschiene (17) mit Gelenkverbindungen (G, 81, 81') versehen ist, wobei in Vorlaufrichtung vor und nach einer Gelenkverbindung (G, 81, 81') Tragschienen-Teilstücke (TSi, TSi+1) gebildet sind, die in unterschiedlicher Winkellage zueinander einstellbar sind, und dass die Tragschiene (17) im Bereich der Gelenkverbindung (G, 81, 81') durch einen Trennspalt (SP) unterbrochen ist, wobei die beiden unterbrochenen Teilstücke (170; TSi, TSi+1) des Kanals (122) über eine Bypass-Leitung (141, 141a, 141b) miteinander verbunden sind.

6. Transportsystem nach Anspruch 5, **dadurch gekennzeichnet, dass** die Tragschienen-Laufflächen (17a) im Bereich der Gelenkverbindung (G, 81, 81') über die in diesem Bereich vorgesehenen Trennspalten (SP) hinweg auf gleichem Niveau, d.h. zueinander fluchtend angeordnet sind, wobei im Bereich des Trennspaltes (SP) an den dort aneinander grenzenden Tragschienen-Teilstücken (TSi, TSi+1) An- und Ablauffasen (91, 92) ausgebildet sind.

7. Transportsystem nach Anspruch 5 oder 6, **dadurch gekennzeichnet, dass** die Tragschienen-Teilstücke (TSi, TSi+1) und die in diesem Bereich vorgesehene Gelenkverbindung (G, 81, 81') durchbiegungsfrei und torsionssteif unter Aufrechterhaltung einer zueinander fluchtenden Tragschienen-Lauffläche (17a) ausgebildet sind.

8. Transportsystem nach einem der Ansprüche 5 bis 7, **dadurch gekennzeichnet, dass** die Tragschiene (17) oder die Tragschienen-Teilstücke (TSi, TSi+1) vor oder nach der Gelenkverbindung (G, 81, 81') eine Trägerkonstruktion mit Tragschienen-Teilstücken (TRi, TRi+1) umfassen, und zwar mit einem untenliegenden Tragteil (99) und einem dazu beabstandeten oberen Tragteil (98), wobei das jeweils untere und obere Tragteil (99, 98) über jeweils zumindest eine Verstärkungsrippe (100) fest miteinander verbunden sind.

9. Transportsystem nach Anspruch 8, **dadurch gekennzeichnet, dass** an zumindest einem unteren und einem oberen Tragteil (98, 99) jeweils ein plattenförmiger Tragplattengelenkabschnitt 98', 99') ausgebildet ist, in welchem eine Gelenkscheibe (81, 81') angeordnet ist, die eine entsprechende Bohrung in dem Überlappungsbereich mit dem angrenzenden vor- bzw. nachlaufenden Trägerteil (99, 98) durchsetzt.

10. Transportsystem nach einem der Ansprüche 5 bis 9, **dadurch gekennzeichnet, dass** die Tragschiene (17) bzw. die Tragschienen-Teilstücke (TRi, TRi+1) direkt oder unter Zwischenschaltung von Abstandshaltern (42) oder isolierenden Abstandshaltern (42) auf den unteren Tragteilen (99) abgestützt und gehalten sind.

11. Transportsystem nach einem der Ansprüche 1 bis 10, **dadurch gekennzeichnet, dass** das Kluppenteil (6) und/ oder das Transportteil (7) volumen- oder gewichtsmäßig zu mehr als 25%, insbesondere zu mehr als 30%, 40%, 50%, 60%, 70%, 80% oder zu mehr als 90% aus einem oder mehreren Verbundwerkstoffen, insbesondere langfaserigen Faserverbundwerkstoffen, bestehen oder diese umfassen.

12. Transportsystem nach Anspruch 10, **dadurch gekennzeichnet, dass** das Kluppenteil (6) und/oder das Transportteil (7) zumindest einen Verbundwerkstoff mit zumindest einem Matrix-Material und mit zumindest einer Funktions- oder Eigenschaftskomponente umfasst, wobei
a) die zumindest eine Matrix-Komponente eines oder mehrere der Materialien Aluminium, Magnesium, Keramik, Kohlenstoff, Duromere, Elastomere und/oder Thermoplaste umfasst, insbesondere Duroplaste, Polymere, Harze, Polyesterharze, Polyurethanharze, Polyurethan, Epoxidharze, Silikonharze, Vinylesterharze, Phenolharze, Acrylharze (PMMA), und
b) die Eigenschafts- oder Funktionskomponente eines oder mehrere der Materialien Glasfasern, Kohlestofffasern, Keramikfasern, Aramidfasern, Borfasern, Stahlfasern und/oder Nylonfasern, insbesondere in langfaseriger Ausgestaltung umfasst oder daraus besteht.

13. Transportsystem nach einem der Ansprüche 1 bis 12, **dadurch gekennzeichnet, dass** die Transportkette (13) in einem Teilumfang um zumindest ein Kettenrad (51) herum geführt ist, und dass auch in diesem Bereich die Tragschiene (17) mit dem Kanal (122) unter Ausbildung eines Luftkissens (130) ausgebildet ist.

14. Transportsystem nach einem der Ansprüche 1 bis 13, **dadurch gekennzeichnet, dass** an der Unterseite der Kluppen-Ketteneinheiten (KK) Luftlager-Kissenplatten (140) vorgesehen sind, zwischen denen und der Lauffläche (17a) der Tragschiene (17) das Luftkissen (130) ausgebildet ist, wobei jeweils zwei aufeinander folgende LuftlageKissenplatten (140) zweier aufeinander folgender Kluppen-Ketteneinheiten (KK) über eine ineinander greifende konvexe bzw. konkave Begrenzungsfläche (41a, 41b) verfügen, wodurch zwei aufeinander folgende Kluppen-Ketteneinheiten (KK) mit den ihnen zugeordneten Luftlager-Kissenplatten (140) winklig zueinander verstellbar sind.

15. Transportsystem nach Anspruch 14, **dadurch gekennzeichnet, dass** die teilkreisförmige konvexe Begrenzungsfläche (140a), die in eine teilkreisförmige konkave Begrenzungsfläche (140b) einer benachbarten nächsten Luftlager-Kissenplatte (140) eingreift, so gestaltet ist, dass die virtuellen Mittelpunkte und/oder Drehachsen der teilkreisförmigen Begrenzungsflächen (140a, 140b) zur Lauffläche (17a) der Tragschiene (17) versetzt liegen, insbesondere durch den Achsmittelpunkt der zugehörigen Kettenbolzen (13.7) verlaufen.

16. Transportsystem nach Anspruch 14 oder 15, **dadurch gekennzeichnet, dass** zwischen zwei Begrenzungsflächen (140a, 140b) zweier benachbarter oder aufeinander folgender Luftlager-Kissenplatten (140) ein Trennspalt (140c) gebildet ist, der kleiner als 2 mm, insbesondere kleiner als 1,5 mm, 1 mm, 0,75 mm, 0,5 mm und insbesondere kleiner als 0,25 mm ist.

17. Transportsystem nach einem der Ansprüche 1 bis 16, **dadurch gekennzeichnet, dass** die an der Unterseite der Kluppen-Ketteneinheit (KK) ausgebildete Lagereinrichtung (139) als geschlossene oder im Wesentlichen geschlossene Pad-Lauffläche ausgebildet ist, worüber die Austrittsöffnungen (122') voll überdeckt sind.

18. Transportsystem nach einem der Ansprüche 1 bis 17, **dadurch gekennzeichnet, dass** die Kluppen-Ketteneinheiten (KK) an ihrer der Lauffläche (17a) der Tragschiene (17) und/oder der Lauffläche (31, 33) der Führungsschiene (15) zugewandt liegenden Führungs- und Abstützfläche mit einer Gleitlagerung (140, 29) versehen sind, die auch bei Ausfall eines Luftkissens (130) ein reibarmes Gleiten auf der Lauffläche (17a) der Tragschiene (17) und/oder den Laufflächen (31, 33) der Führungsschiene (15) ermöglicht.

19. Transportsystem nach Anspruch 18, **dadurch gekennzeichnet, dass** die Gleitlagerungen (140, 29) Thermoplaste oder Duroplaste umfassen oder daraus bestehen, die vorzugsweise mit Kohle- und/oder Glasfasern, mit Festschmierstoffen insbesondere in Form von Graphit oder Molybdänsulfid versetzt und/oder mit gleitarmen Kunststoffen beschichtet und/oder mittels mechanischer Oberflächenbehandlung und/oder durch Strahlung sowie thermische oder elektrische Oberflächenbehandlung hergestellt sind.

20. Transportsystem nach einem der Ansprüche 1 bis 19, **dadurch gekennzeichnet, dass** die an der Kluppen-Ketteneinheit (KK) in einer Reckkraft-Ebene (Y) ansetzenden Reckkräfte (FR) sowie die durch den Schwerpunkt (GS) der Kluppen-Ketteneinheit (KK) verlaufenden und in einer Fliehkraft-Ebene (S) ansetzenden Fliehkräfte (FF) sowie die in einer Querkraft-Ebene (Q) ansetzenden Seitenführungskräfte (FS) sowie Querkräfte (FQ) in einem Winkel von 90° ± weniger als 5°, insbesondere weniger als 4°, 3°, 2° oder insbesondere weniger als 1° bezüglich der an einem Schwerpunkt (GS) der Kluppen-Ketteneinheit (KK) ansetzenden Gewichtskraft (FG) verlaufen.

21. Transportsystem nach Anspruch 20, **gekennzeichnet durch** die folgenden weiteren Merkmale:
- die Kluppen-Ketteneinheiten (KK) umfassen zumindest eine reckseitig ausgerichtete Reckkraft-Lauffläche (33) und eine dazu entgegengesetzt weisende Kettenkraft-Lauffläche (31), die parallel und aufeinander zu weisend ausgerichtet sind, worüber die Kluppen-Ketteneinheit (KK) längs der Führungsschiene (15) mit einer Kettenkraft-Lauffläche (31) und einer dazu parallelen und gegensinnig ausgerichteten Reckkraft-Lauffläche (33) verfahrbar geführt ist, wobei die Kettenkraft-Lauffläche (31) im Bereich ihrer Kettenkraft-Laufflächenhöhe (231) und die Reckkraft-Lauffläche (33) im Bereich ihrer Reckkraft-Laufflächenhöhe (233) mit der Führungsschiene (15) wechselwirkt und **dadurch** geführt ist, und
- auf der Unterseite (25f) der Kluppen-Ketteneinheit (KK) ist eine oder sind mehrere Gleitelemente (40; 40a, 40b) mit einer Abstützflächenanordnung (39) zur Abstützung der Kluppen-Ketteneinheit (KK) gegenüber der Lauffläche (17a) der Tragschiene (17) vorgesehen, wobei die **durch** den Schwerpunkt (GS) der Kluppen-Ketteneinheit (KK) verlaufende Schwerkraft-Ebene (Sz) die Abstützflächenanordnung (39) bezogen auf deren maximale Erstreckungsbreite (39'; x + y) quer zur Vorschubrichtung sowie die Tragschienen-Lauffläche (17) schneidet.

22. Transportsystem nach Anspruch 19 oder 21, **dadurch gekennzeichnet, dass** die Reckkraft-Ebene (Y), die Fliehkraft-Ebene (S) und die Querkraft- oder Seitenführungskraft-Ebene (Q) die Führungsschiene (15) in einem Bereich schneiden, in welchem sich die Kluppen-Ketteneinheit (KK) an der Führungsschiene (15) abstützt.

23. Transportsystem nach einem der Ansprüche 19 bis 22, **dadurch gekennzeichnet, dass** die Kluppen-Ketteneinheit (KK) so ausgebildet ist, dass
- die Fliehkraft-Ebene (S) in einem Schwerkraft-Wirkabstand (WA1) parallel zur Reckkraft-Ebene (Y) verläuft,
- die Querkraft- oder Seitenführungskraft-Ebene (Q) in einem Kraftwirkabstand (WA2) parallel zur Reckkraft-Ebene (Y) verläuft, und
- ein zwischen der Fliehkraft-Ebene (S) und der Unterkante (15c) der Führungsschiene (15) vorgesehener Abstand (AF) zumindest zweimal so groß und vorzugsweise zumindest dreimal, viermal oder zumindest fünfmal so groß ist wie der größte der beiden Wirkabstände (WA1) oder (WA2).

24. Transportsystem nach einem der Ansprüche 19 bis 23, **dadurch gekennzeichnet, dass** die Kluppen-Ketteneinheit (KK) und die Führungsschiene (15) so ausgebildet sind, dass
- die Fliehkraft-Ebene (S) und/oder die Querkraft- oder Seitenführungskraft-Ebene (Q) mit der Reckkraft-Ebene (Y) zusammenfallen, und
- ein Abstand (AF) zwischen der Schwerkraft-Ebene (S) und der Unterkante (15c) der Führungsschiene (15) so bemessen ist, dass dieser zumindest 1 mm, vorzugsweise zumindest 5 mm, 10 mm, 20 mm, 30 mm, 40 mm, 50 mm oder mehr beträgt.

25. Transportsystem nach einem der Ansprüche 19 bis 24, **dadurch gekennzeichnet, dass** die Verlängerung der Kettenkraft-Lauffläche (31a) sowie die Verlängerung der Reckkraft-Lauffläche (33a) die Luftlager-Kissenplatte (140) schneidet.

26. Transportsystem nach einem der Ansprüche 1 bis 25, **dadurch gekennzeichnet, dass** die Kluppen-Ketteneinheit (KK) so ausgebildet ist, dass die daran ansetzenden Kräfte entkoppelt sind und kipp- oder drehmomentfrei unter Vermeidung einer Erhöhung der Flächenpressung zwischen der Kluppen-Ketteneinheit (KK) und der Tragschiene (17) und/oder der Führungsschiene (15) angreifen.

27. Transportsystem nach einem der Ansprüche 1 bis 26, **dadurch gekennzeichnet, dass** die Kluppen-Ketteneinheit (KK) so ausgebildet ist, dass die daran ansetzenden Kräfte soweit entkoppelt sind, dass die an der Kluppen-Ketteneinheit (KK) ansetzenden Kräfte nur zu einer maximal 5%- oder 10%-igen Erhöhung der Kipp- oder Drehmomente und damit zu einer entsprechenden Erhöhung der Flächenpressung zwischen der Kluppen-Ketteneinheit (KK) und der Tragschiene (17) und/oder der Führungschiene (15) führen.

## Claims

1. A transport system, in particular stretching installation, having the following features:
- at least one guide path (2) is provided,
- a transport chain (13) is arranged so as to circulate on said guide path (2),
- for this purpose, the guide path (2) comprises a guide rail (15),
- the transport chain (13) comprises a multiplicity of chain links that are articulatedly connected to one another,
- clip chain units (KK) are provided which are divided into a clip part (6) and into a chain part (7) comprising a chain link,
- furthermore, a support rail (17) which accommodates the weight force (FG) of the clip chain unit (KK) is provided,
**characterized by** the following further features:
- the support rail (17) or the guide rail (15), or the support rail and the guide rail (17, 15), is or are equipped with a duct (122) which extends through the support rail (17) and/or the guide rail (15) in a longitudinal direction at least in one length segment,
- the support rail running surface (17a) comprises a multiplicity of outlet openings (122') formed therein, through which outlet openings compressed air can be supplied via the duct (122) so as to generate an air cushion (130) between the support rail running surface (17a) and an air bearing cushion plate (140) on the clip chain unit (KK), and/or
- the running rail running surfaces (31a, 31b) comprise a multiplicity of outlet openings (122') formed therein, through which outlet openings compressed air can be supplied via the duct (122) so as to generate an air cushion (130) between the respective guide rail running surface (31a, 33a) and a bearing device (139) on the clip chain unit (KK) .

2. The transport system as claimed in claim 1, **characterized in that** the outlet openings (122') have a diameter dimension smaller than 1 mm, in particular smaller than 0.9 mm, 0.8 mm, 0.7 mm, 0.6 mm, 0.5 mm, 0.4 mm, 0.3 mm, 0.2 mm, in particular smaller than 0.1 mm.

3. The transport system as claimed in claim 1 or 2, **characterized in that** the outlet openings (122') are composed of a perforation (122'') or are configured in the form of a porous support rail running surface (17a).

4. The transport system as claimed in one of claims 1 to 3, **characterized in that**
a) the air bearing cushion plates (140) have a width, perpendicular to the feed direction, which is greater than the width of the support rail (17) or greater than the air outlet width (122c) within which the air outlet openings (122') in the support rail running surface (17a) are formed, or
b) **in that** the slide bearing arrangements (29; 31, 33) assigned to the guide rail running surfaces (31a, 31b) have a height dimension, perpendicular to the feed direction, which is greater than the air outlet width (122c) in the guide rail (15), wherein the air outlet openings (122') are provided within the air outlet width (122c).

5. The transport system as claimed in one of claims 1 to 4, **characterized in that** the support rail (17) is equipped with articulated connections (G, 81, 81'), wherein, upstream and downstream of an articulated connection (G, 81, 81') in the feed direction, there are formed support rail pieces (TSi, TSi+1) which can be set into different angular positions relative to one another, and **in that** the the support rail (17) is rendered discontinuous, in the region of the articulated connection (G, 81, 81'), by a parting gap (SP), wherein the two discontinuous pieces (170; TSi, TSi+1) of the duct (122) are connected to one another by way of a bypass line (141, 141a, 141b).

6. The transport system as claimed in claim 5, **characterized in that** the support rail running surfaces (17a) are, in the region of the articulated connection (G, 81, 81'), arranged at the same level, that is to say in mutual alignment, across the parting gaps (SP) provided in said region, wherein, in the region of the parting gap (SP), run-on and run-off chamfers (91, 92) are formed on the support rail pieces (TSi, TSi+1) that adjoin one another there.

7. The transport system as claimed in claim 5 or 6, **characterized in that** the support rail pieces (TSi, TSi+1) and the articulated connection (G, 81, 81') provided in said region are formed so as to be bend-free and torsionally rigid so as to maintain a mutually aligned support rail running surface (17a).

8. The transport system as claimed in one of claims 5 to 7, **characterized in that** the support rail (17) or the support rail pieces (TSi, TSi+1) comprise(s), upstream or downstream of the articulated connection (G, 81, 81'), a beam structure with support rail pieces (TRi, TRi+1), specifically with a lower support part (99) and with an upper support part (98) spaced apart from said lower support part, wherein the in each case lower and upper support parts (99, 98) are fixedly connected to one another by way of in each case at least one reinforcement rib (100).

9. The transport system as claimed in claim 8, **characterized in that**, on at least one lower and one upper support part (98, 99), there is formed in each case one plate-shaped support plate joint section (98', 99') in which a joint disk (81, 81') is arranged which extends through a corresponding bore in the region of overlap with the adjoining leading or trailing beam part (99, 98).

10. The transport system as claimed in one of claims 5 to 9, **characterized in that** the support rail (17) and/or the support rail pieces (TRi, TRi+1) are supported and held on the lower support parts (99) directly or with the interposition of spacers (42) or insulating spacers (42).

11. The transport system as claimed in one of claims 1 to 10, **characterized in that** the clip part (6) and/or the transport part (7) are/is composed of or comprise(s) one or more composite materials, in particular long-fiber fiber composite materials, in a volumetric or weight fraction of more than 25%, in particular more than 30%, 40%, 50%, 60%, 70%, 80% or more than 90%.

12. The transport system as claimed in claim 10, **characterized in that** the clip part (6) and/or the transport part (7) comprises at least one composite material with at least one matrix material and with at least one functional or property component, wherein
a) the at least one matrix component comprises one or more of the materials aluminum, magnesium, ceramic, carbon, duromers, elastomers and/or thermoplastics, in particular thermosets, polymers, resins, polyester resins, polyurethane resins, polyurethane, epoxy resins, silicone resins, vinyl ester resins, phenol resins, acrylic resins (PMMA), and
b) the property or functional component comprises or is composed of one or more of the materials glass fibers, carbon fibers, ceramic fibers, aramid fibers, boron fibers, steel fibers and/or nylon fibers, in particular in long fiber form.

13. The transport system as claimed in one of claims 1 to 12, **characterized in that** the transport chain (13) is guided around at least a part of the circumference of at least one sprocket (51), and **in that** the support rail (17) with the duct (122) for forming an air cushion (130) is also formed in this region.

14. The transport system as claimed in one of claims 1 to 13, **characterized in that**, on the underside of the clip chain units (KK), there are provided air bearing cushion plates (140), between which and the running surface (17a) of the support rail (17) the air cushion (130) is formed, wherein in each case two successive air bearing cushion plates (140) of two successive clip chain units (KK) have a convex and concave delimiting surface (41a, 41b), respectively, which delimiting surfaces engage into one another, whereby two successive clip chain units (KK), with the air bearing cushion plates (140) assigned thereto, can be set at an angle with respect to one another.

15. The transport system as claimed in claim 14, **characterized in that** the circular segment-shaped convex delimiting surface (140a) which engages into a circular segment-shaped concave delimiting surface (140b) of a directly adjacent air bearing cushion plate (140) is designed such that the virtual central points and/or axes of rotation of the circular segment-shaped delimiting surfaces (140a, 140b) lie offset with respect to the running surface (17a) of the support rail (17), in particular run through the axis central point of the associated chain pin (13.7).

16. The transport system as claimed in claim 14 or 15, **characterized in that**, between two delimiting surfaces (140a, 140b) of two adjacent or successive air bearing cushion plates (140), there is formed a parting gap (140c) which is smaller than 2 mm, in particular smaller than 1.5 mm, 1 mm, 0.75 mm, 0.5 mm and in particular smaller than 0.25 mm.

17. The transport system as claimed in one of claims 1 to 16, **characterized in that** the bearing device (139) formed on the underside of the clip chain unit (KK) is in the form of a closed or substantially closed pad running surface which fully covers the outlet openings (122').

18. The transport system as claimed in one of claims 1 to 17, **characterized in that** the clip chain units (KK) are equipped, on their guide and support surface situated facing the running surface (17a) of the support rail (17) and/or the running surface (31, 33) of the guide rail (15), with a slide bearing arrangement (140, 29), which slide bearing arrangements, even in the event of failure of an air cushion (130), permit low-friction sliding on the running surface (17a) of the support rail (17) and/or on the running surfaces (31, 33) of the guide rail (15).

19. The transport system as claimed in claim 18, **characterized in that** the slide bearing arrangements (140, 29) comprise or are composed of thermoplastics or thermosets, which preferably include carbon and/or glass fibers, solid lubricants in particular in the form of graphite or molybdenum sulfide, and/or are coated with low-friction plastics and/or are produced by means of mechanical surface treatment and/or by radiation and by thermal or electrical surface treatment.

20. The transport system as claimed in one of claims 1 to 19, **characterized in that** the stretching forces (FR), which act on the clip chain unit (KK) in a stretching force plane (Y), and the centrifugal forces (FF), which run through the center of gravity (GS) of the clip chain unit (KK) and act in a centrifugal force plane (S), and the lateral guiding forces (FS) and transverse forces (FQ), which act in a transverse force plane (Q), run at an angle of 90° ± less than 5°, in particular less than 4°, 3°, 2° or in particular less than 1°, with respect to the weight force (FG) which acts at a center of gravity (GS) of the clip chain unit (KK) .

21. The transport system as claimed in claim 20, **characterized by** the following further features:
- the clip chain units (KK) comprise at least one stretching force-sustaining running surface (33), oriented toward the stretching side, and a chain force-sustaining running surface (31) pointing in the opposite direction to said stretching force-sustaining running surface, which stretching force-sustaining running surface and chain force-sustaining running surface are oriented parallel to one another and so as to point toward one another, whereby the clip chain unit (KK) is guided so as to be displaceable along the guide rail (15) by way of a chain force-sustaining running surface (31) and a stretching force-sustaining running surface (33) which is oriented parallel to and in the opposite direction to said chain force-sustaining running surface, wherein the chain force-sustaining running surface (31), in the range of its chain force-sustaining running surface height (231), and the stretching force-sustaining running surface (33), in the range of its stretching force-sustaining running surface height (233), interact with, and are thus guided by, the guide rail (15), and
- on the underside (25f) of the clip chain unit (KK), there is or are provided one or more slide elements (40; 40a, 40b) with a support surface arrangement (39) for the support of the clip chain unit (KK) with respect to the running surface (17a) of the support rail (17), wherein the center of gravity plane (Sz) running through the center of gravity (GS) of the clip chain unit (KK) intersects the support surface arrangement (39), in relation to its maximum width extent (39'; x + y), perpendicular to the feed direction and the support rail running surface (17).

22. The transport system as claimed in claim 19 or 21, **characterized in that** the stretching force plane (Y), the centrifugal force plane (S) and the transverse force or lateral guidance force plane (Q) intersect the guide rail (15) in a region in which the clip chain unit (KK) is supported on the guide rail (15).

23. The transport system as claimed in one of claims 19 to 22, **characterized in that** the clip chain unit (KK) is designed such that
- the centrifugal force plane (S) runs parallel, and with a gravitational force effective spacing (WA1) , to the stretching force plane (Y),
- the transverse force or lateral guidance force plane (Q) runs parallel, and with a force effective spacing (WA2), to the stretching force plane (Y), and
- a spacing (AF) provided between the centrifugal force plane (S) and the lower edge (15c) of the guide rail (15) is at least twice as large, and preferably at least three times, four times or at least five times as large, as the greatest of the two effective spacings (WA1) or (WA2).

24. The transport system as claimed in one of claims 19 to 23, **characterized in that** the clip chain unit (KK) and the guide rail (15) are designed such that
- the centrifugal force plane (S) and/or the transverse force or lateral guidance force plane (Q) coincide with the stretching force plane (Y), and
- a spacing (AF) between the gravitational force plane (S) and the lower edge (15c) of the guide rail (15) is dimensioned with a size of at least 1 mm, preferably at least 5 mm, 10 mm, 20 mm, 30 mm, 40 mm, 50 mm or more.

25. The transport system as claimed in one of claims 19 to 24, **characterized in that** the projection of the chain force-sustaining running surface (31a) and the projection of the stretching force-sustaining running surface (33a) intersect the air bearing cushion plate (140) .

26. The transport system as claimed in one of claims 1 to 25, **characterized in that** the clip chain unit (KK) is designed such that the forces acting thereon are decoupled and act, without tilting moments or torques, so as to prevent an increase in contact pressure between the clip chain unit (KK) and the support rail (17) and/or the guide rail (15).

27. The transport system as claimed in one of claims 1 to 26, **characterized in that** the clip chain unit (KK) is designed such that the forces acting thereon are decoupled to such an extent that the forces acting on the clip chain unit (KK) lead only to at most a 5% or 10% increase in the tilting moments or torques and thus to a corresponding increase in contact pressure between the clip chain unit (KK) and the support rail (17) and/or the guide rail (15).

## Revendications

1. Système de transport, en particulier installation d'étirage avec les éléments techniques suivants :
- il est prévu au moins une voie de guidage (2),
- une chaîne de transport (13) est agencée en recirculation sur cette voie de guidage (2),
- la voie de guidage (2) inclut à cet effet un rail de guidage (15),
- la chaîne de transport (13) inclut une pluralité de maillons de chaîne reliés les uns aux autres de manière articulée,
- il est prévu des unités chaîne-pince (KK), qui sont subdivisées en une partie formant pince (6) et en une partie formant chaîne (7) incluant des maillons de chaîne,
- il est en outre prévu un rail porteur (17) qui encaisse la force pondérale (FG) de l'unité chaîne-pince (KK),
**caractérisé par** les caractéristiques suivantes :
- le rail porteur (17) ou le rail de guidage (15) ou encore le rail porteur et le rail de guidage (17, 15) est/sont doté(s) d'un canal (122) qui traverse en direction longitudinale au moins dans une longueur partielle du rail porteur (17) ou respectivement du rail de guidage (15),
- la surface de déplacement du rail porteur (17a) inclut une pluralité d'ouvertures de sortie (122') ménagées dans celle-ci, à travers lesquelles peut être amené de l'air comprimé via le canal (122) en engendrant un coussin d'air (130) entre la surface de déplacement du rail porteur (17a) et une plaque-coussin formant palier pneumatique (140) sur l'unité chaîne-pince (KK), et/ou
- les surfaces de déplacement du rail de guidage (31a, 31b) incluent une pluralité d'ouvertures de sortie (122') ménagées dans celle-ci, à travers lesquelles peut être amené de l'air comprimé via le canal (122) en engendrant un coussin d'air (130) entre la surface de déplacement respective du rail de guidage (31a, 33a) et un dispositif formant palier (139) sur l'unité chaîne-pince (KK).

2. Système de transport selon la revendication 1,
**caractérisé en ce que** les ouvertures de sortie (122') ont un diamètre qui est plus petit que 1 mm, en particulier plus petit que 0,9 mm, 0,8 mm, 0,7 mm, 0,6 mm, 0,5 mm, 0,4 mm, 0,3 mm, 0,2 mm, en particulier plus petit que 0,1 mm.

3. Système de transport selon la revendication 1 ou 2,
**caractérisé en ce que** les ouvertures de sortie (122') sont constituées par une perforation (122") ou sont conçues sous la forme d'une surface de déplacement poreuse (17a) du rail porteur.

4. Système de transport selon l'une des revendications 1 à 3,
**caractérisé en ce que**
a) les plaques-coussins formant palier pneumatique (140) ont une largeur, perpendiculairement à la direction d'avance, qui est plus grande que la largeur du rail porteur (17) ou plus grande que la largeur de sortie d'air (122c) à l'intérieur de laquelle sont réalisées les ouvertures de sortie d'air (122') dans la surface de déplacement (17a) du rail porteur, ou
b) **en ce que** les paliers coulissants (29 ; 31, 33) associés aux surfaces de déplacement (31a, 31b) du rail de guidage ont une dimension en hauteur, perpendiculairement à la direction d'avance, qui est plus grande que la largeur de sortie d'air (122c) dans le rail de guidage (15), et les ouvertures de sortie d'air (122') sont prévues à l'intérieur de la largeur de sortie d'air (122c).

5. Système de transport selon l'une des revendications 1 à 4,
**caractérisé en ce que** le rail porteur (17) est doté de liaisons articulées (G, 81, 81'), dans lequel des morceaux partiels de rail porteur (TSi, TSi+1) sont formés avant et après une liaison articulée (G, 81, 81') en direction d'avance, morceaux partiels qui sont susceptibles d'être réglés dans une position angulaire différente les uns par rapport aux autres, et **en ce que** le rail porteur (17) est interrompu par une fente de séparation (SP) dans la région de la liaison articulée (G, 81, 81'), et les deux morceaux partiels interrompus (170 ; TSi, TSi+1) du canal (122) sont reliés l'un à l'autre par un conduit de by-pass (141, 141a, 141b).

6. Système de transport selon la revendication 5,
**caractérisé en ce que** les surfaces de déplacement (17a) du rail porteur sont agencées, dans la région de la liaison articulée (G, 81, 81') et au-delà des fentes de séparation (SP) prévue dans cette région, au même niveau, c'est-à-dire en alignement les unes par rapport aux autres, et dans la région de la fente de séparation (SP) des chanfreins d'entrée et de sortie (91, 92) sont réalisés au niveau des morceaux partiels du rail porteur (TSi, TSi+1) mutuellement adjacents à cet endroit.

7. Système de transport selon la revendication 5 ou 6,
**caractérisé en ce que** les morceaux partiels du rail porteur (TSi, TSi+1) et la liaison articulée (G, 81, 81') prévue dans cette région sont réalisés sans flexion et rigides en torsion en maintenant une surface de déplacement (17a) en alignement mutuel sur le rail porteur.

8. Système de transport selon l'une des revendications 5 à 7,
**caractérisé en ce que** le rail porteur (17) ou les morceaux partiels du rail porteur (TSi, TSi+1) inclus(en)t avant ou après la liaison articulée (G, 81, 81') une construction porteuse avec des morceaux partiels de rail porteur (TRi, TRi+1), et cela avec une partie porteuse située au-dessous (99) et une partie porteuse supérieure (98) écartée de celle-ci, et la partie porteuse respective inférieure et supérieure (99, 98) sont reliées fermement l'une à l'autre au moyen d'au moins une nervure de renforcement respective (100).

9. Système de transport selon la revendication 8,
**caractérisé en ce qu'**une portion d'articulation de plaque porteuse (98', 99') respective est réalisée sur au moins une partie porteuse inférieure et une partie porteuse supérieure (98, 99), portion dans laquelle est agencée une plaque d'articulation (81, 81') qui est traversée par un perçage correspondant dans la zone de chevauchement avec la partie porteuse antérieure ou postérieure adjacente (99, 98).

10. Système de transport selon l'une des revendications 5 à 9,
**caractérisé en ce que** le rail porteur (17) ou respectivement les morceaux partiels de rail porteur (TRi, TRi+1) est/sont soutenu(s) et maintenu(s) sur les parties porteuses inférieures (99) soit directement soit avec interposition d'éléments d'écartement (42) ou d'éléments d'écartement isolants (42).

11. Système de transport selon l'une des revendications 1 à 10,
**caractérisé en ce que** la partie formant pince (6) et/ou la partie de transport (7) est constituée, sur le plan volumétrique ou pondéral, à raison de plus de 25 %, en particulier plus de 30 %, 40 %, 50 %, 60 %, 70 %, 80 %, ou encore plus de 90 % d'un ou plusieurs matériaux composites, en particulier des matériaux composites fibreux incluant des fibres longues, ou inclut de tels matériaux.

12. Système de transport selon la revendication 10,
**caractérisé en ce que** la partie formant pince (6) et/ou la partie de transport (7) inclut au moins un matériau composite avec au moins un matériau de matrice et avec au moins une composante fonctionnelle ou une composante influant sur les propriétés, dans lequel
a) ladite au moins une composante de matrice inclut ou est constituée d'un ou plusieurs des matériaux aluminium, magnésium, céramique, carbone, duromère, élastomère et/ou matière thermoplastique, en particulier duroplaste, polymère, résine, résine polyester, résine polyuréthane, polyuréthane, résine époxyde, résine au silicone, résine vinyle ester, résine phénolique, résine acrylique (PMMA), et
b) la composante fonctionnelle ou la composante influant sur les propriétés inclut ou est constituée d'un ou plusieurs des matériaux fibres de verre, fibres de carbone, fibres céramiques, fibres aramides, fibres de bore, fibres d'acier et/ou fibres de nylon, en particulier dans une configuration à longues fibres.

13. Système de transport selon l'une des revendications 1 à 12, **caractérisé en ce que** la chaîne de transport (13) est guidée, dans une circonférence partielle, autour d'au moins une roue dentée (51), et **en ce que** dans cette région également le rail porteur (17) est réalisé avec le canal (122) en réalisant un coussin d'air (130).

14. Système de transport selon l'une des revendications 1 à 13,
**caractérisé en ce qu'**il est prévu des plaques-coussin formant palier pneumatique (140) à la face inférieure des unités chaînes-pinces (KK), telles que le coussin d'air (130) est réalisé entre ces plaques et la surface de déplacement (17a) du rail porteur (17), dans lequel respectivement deux plaques-coussin formant palier pneumatique mutuellement successives (140) de deux unités chaînes-pinces (KK) mutuellement successives disposent d'une surface de limitation convexe ou concave (41a, 41b) en engagement mutuel, grâce à quoi deux unités chaînes-pinces (KK) successives sont susceptibles d'être réglées de manière angulaire l'une par rapport à l'autre avec les plaques-coussin formant palier pneumatique (140) qui leur sont associées.

15. Système de transport selon la revendication 14,
**caractérisé en ce que** la surface de limitation (140a) convexe en forme de cercle partiel, qui s'engage dans une surface de limitation (140b) concave en forme de cercle partiel d'une plaque-coussin formant palier pneumatique (140) voisine suivante, est ainsi conçue que les centres virtuels et/ou les axes de rotation des surfaces de limitation (140a, 140b) en forme de cercle partiel sont disposés en décalage par rapport à la surface de déplacement (17a) du rail porteur (17), et passent en particulier par le centre de l'axe du pivot de chaîne associé (13.7).

16. Système de transport selon la revendication 14 ou 15,
**caractérisé en ce qu'**entre deux surfaces de limitation (140a, 140b) de deux plaques-coussin formant palier pneumatique (140) voisines ou mutuellement successives, il est formé un intervalle de séparation (140c) qui est plus petit que 2 mm, en particulier plus petit que 1,5 mm, 1 mm, 0,75 mm, 0,5 mm et en particulier plus petit que 0,25 mm.

17. Système de transport selon l'une des revendications 1 à 16,
**caractérisé en ce que** le système formant palier (139) réalisé au niveau de la face inférieure de l'unité chaîne-pince (KK) est réalisé sous la forme d'une surface de déplacement en forme de patin fermé ou sensiblement fermé, par laquelle les ouvertures de sortie (122') sont entièrement recouvertes.

18. Système de transport selon l'une des revendications 1 à 17,
**caractérisé en ce que** les unités chaînes-pinces (KK) sont dotées, au niveau de leur surface de guidage et de soutien tournée vers la surface de déplacement (17a) du rail porteur (17) et/ou la surface de déplacement (31, 33) du rail de guidage (15), d'un palier coulissant (140, 29) qui, également en cas de défaillance d'un coussin d'air (130), permet un coulissement à faible friction sur la surface de déplacement (17a) du rail porteur (17) et/ou les surfaces de déplacement (31, 33) du rail de guidage (15).

19. Système de transport selon la revendication 18,
**caractérisé en ce que** les paliers coulissants (140, 29) incluent ou sont constitués par des matières thermoplastiques ou des matières thermodurcissables, qui sont de préférence mélangées avec des fibres de carbone et/ou des fibres de verre, avec des lubrifiants solides en particulier sous la forme de graphite ou de sulfure de molybdène et/ou sont revêtus avec des matières plastiques à faible friction et/ou sont produits avec un traitement de surface mécanique et/ou un traitement de surface par rayonnement ou encore un traitement de surface thermique ou électrique.

20. Système de transport selon l'une des revendications 1 à 19,
**caractérisé en ce que** les forces d'étirage (FR) appliquées à l'unité chaîne-pince (KK) dans un plan des forces dues à l'étirage (Y), ainsi que les forces d'inertie (FN) passant par le centre de gravité (GS) de l'unité chaîne-pince (KK) et appliquées dans un plan des forces dues à l'inertie (S), ou encore les forces de guidage latérales (FS) et les forces transversales (FQ) appliquées dans un plan des forces transversales (Q) sont dirigées, par rapport à la force pondérale (FG) appliquée au centre de gravité (GS) de l'unité chaîne-pince (KK) sous un angle de 90° ± moins de 5°, en particulier moins de 4°, 3°, 2° ou en particulier moins de 1 °.

21. Système de transport selon la revendication 20,
**caractérisé par** les autres caractéristiques suivantes :
- les unités chaînes-pinces (KK) incluent au moins une surface de déplacement pour les forces dues à l'étirage (33) orientée dans le sens d'étirage, et une surface de déplacement (31) pour les forces dues à la chaîne, dirigée en sens opposé, qui sont orientées parallèlement est tournées l'une vers l'autre, au moyen desquelles l'unité chaîne-pince (KK) est guidée en déplacement le long du rail de guidage (15) avec une surface de déplacement (31) pour les forces dues à la chaîne et une surface de déplacement (33) pour les forces dues à l'étirage, parallèle à celle-ci est orientée en sens opposé, dans lequel la surface de déplacement (31) pour les forces dues à la chaîne, dans la région de la hauteur de surface de déplacement pour les forces dues à la chaîne (231), et la surface de déplacement pour les forces dues à l'étirage (33), dans la région de la hauteur de surface de déplacement pour les forces dues à l'étirage (233), coopère avec le rail de guidage (15) et est guidé par celui-ci, et
- un ou plusieurs éléments de coulissement (40 ; 40a, 40b) sont prévus à la face inférieure (25f) de l'unité chaîne-pince (KK) avec un agencement de surface de soutien (39) pour soutenir l'unité chaîne-pince (KK) par rapport à la surface de déplacement (17a) du rail porteur, dans lequel le plan des forces de gravité (Sz) qui passe par le centre de gravité (GS) de l'unité chaîne-pince (KK) recoupe l'agencement de surface de soutien (39), par référence à sa largeur d'extension maximale (39'; x + y), transversalement à la direction d'avance ainsi que la surface de déplacement (17) du rail porteur.

22. Système de transport selon la revendication 19 ou 21,
**caractérisé en ce que** le plan des forces dues à l'étirage (Y), le plan des forces dues à l'inertie (S), et le plan des forces transversales ou des forces de guidage latérales (Q) recoupent le rail de guidage (15) dans une région dans laquelle l'unité chaîne-pince (KK) est soutenue sur le rail de guidage (15).

23. Système de transport selon l'une des revendications 19 à 22,
**caractérisé en ce que** l'unité chaîne-pince (KK) est ainsi réalisée que
- le plan des forces dues à l'inertie (S) s'étend à une distance effective (WA1) parallèlement au plan des forces dues à l'étirage (Y),
- le plan des forces transversales ou des forces de guidage latérales (Q) s'étend à une distance effective (WA2) parallèlement au plan des forces dues à l'étirage (Y), et
- une distance (AF) prévue entre le plan des forces dues à l'inertie (S) et l'arête inférieure (15c) du rail de guidage (15) est au moins deux fois plus importante et de préférence au moins trois fois, quatre fois ou au moins cinq fois plus importante que la plus grande des deux distances effectives (WA1) ou (WA2).

24. Système de transport selon l'une des revendications 19 à 23,
**caractérisé en ce que** l'unité chaîne-pince (KK) et le rail de guidage (13) sont ainsi réalisés que
- le plan des forces dues à l'inertie (S) et/ou le plan des forces transversales ou des forces de guidage latérales (Q) coïncide avec le plan des forces dues à l'inertie (Y), et
- une distance (AF) prévue entre le plan des forces de gravité (S) et l'arête inférieure (15c) du rail de guidage (15) est choisie de telle façon que celle-ci s'élève à au moins 1 mm, de préférence au moins 5 mm, 10 mm, 20 mm, 30 mm, 40 mm, 50 mm ou plus.

25. Système de transport selon l'une des revendications 19 à 24,
**caractérisé en ce que** le prolongement de la surface de déplacement pour les forces dues à la chaîne (31a) ainsi que le prolongement de la surface de déplacement pour les forces dues à l'étirage (33a) recoupent la plaque-coussin formant palier pneumatique (140).

26. Système de transport selon l'une des revendications 1 à 25,
**caractérisé en ce que** l'unité chaîne-pince (KK) et ainsi réalisée que les forces qui sont appliquées sont découplées et attaquent de manière exempte de couple de basculement ou de rotation en évitant une augmentation de la pression de surface entre l'unité chaîne-pince (KK) et le rail porteur (17) et/ou le rail de guidage (15).

27. Système de transport selon l'une des revendications 1 à 26,
**caractérisé en ce que** l'unité chaîne-pince (KK) et ainsi réalisée que les forces qui lui sont appliquées sont découplées dans la mesure où les forces appliquées à l'unité chaîne-pincent (KK) mènent uniquement à une augmentation maximum de 5 ou de 10 % des couples de basculement ou de rotation, et ainsi à une augmentation correspondante de la pression de surface entre l'unité chaîne-pince (KK) et le rail porteur (17) et/ou le rail de guidage (15).
